# EUROPEAN PATENT SPECIFICATION

(11) **EP 4 156 639 B1**
(45) Date of publication and mention of the grant of the patent: **11.02.2026**
(21) Application number: 22196788.8
(22) Date of filing: 21.09.2022
(51) Int. Cl.: H04L 45/24, H04W 40/02, H04W 28/02

(54) **REDUNDANCY OVER WI-FI FOR ULTRA-RELIABLE WIRELESS TIME SENSITIVE NETWORKING**
REDUNDANZ ÜBER WI-FI FÜR ULTRAZUVERLÄSSIGE DRAHTLOSE ZEITEMPFINDLICHE VERNETZUNG
REDONDANCE SUR WI-FI POUR MISE EN RÉSEAU SENSIBLE AU TEMPS SANS FIL ULTRA-FIABLE

(30) Priority: 23.09.2021 US 202163247607 P
(43) Date of publication of application: 29.03.2023
(73) Proprietor: INTEL Corporation, Santa Clara, CA 95054 (US)
(72) Inventor: KESHAVAMURTHY, Anil, Portland, 97124 (US); KUMAR, Anil, Chandler, 85224 (US); CAVALCANTI, Dave, Portland, 97229 (US); SUDHAKARAN, Susruth, Beaverton, 97006 (US); FANG, Juan, Portland, 97225 (US); GALEEV, Mikhail Tagirovich, Beaverton, 97008 (US)
(74) Representative: Viering, Jentschura & Partner mbB Patent- und Rechtsanwälte

(56) References cited:
- WO-A1-2020/112008
- US-A1- 2020 084 663
- TIME-SENSITIVE NETWORKING TASK GROUP OF IEEE 802 1 OF THE LAN MAN STANDARDS COMMITTEE OF THE IEEE COMPUTER SOCIETY: "IEEE P802.1CB(TM)/D1.1Draft Standard forLocal and metropolitan area networks -Seamless Redundancy ; 802-", IEEE DRAFT; 802-1CB-D1-1, IEEE-SA, PISCATAWAY, NJ USA, vol. 802.1cb drafts, 18 June 2015 (2015-06-18), pages 1 - 78, XP068096129
- HOLGER HEINE ET AL: "The High-Availability Seamless redundancy protocol (HSR): Robust fault-tolerant networking and loop prevention through duplicate discard", FACTORY COMMUNICATION SYSTEMS (WFCS), 2012 9TH IEEE INTERNATIONAL WORKSHOP ON, IEEE, 21 May 2012 (2012-05-21), pages 213 - 222, XP032204358, ISBN: 978-1-4673-0693-5, DOI: 10.1109/WFCS.2012.6242569

## Description

### TECHNICAL FIELD

This disclosure generally relates to circuitries, apparatus and computer-readable media storing computer-executable instructions for wireless communications and, more particularly, to redundancy over Wi-Fi for ultra-reliable wireless time sensitive networking.

### BACKGROUND

Wireless devices are becoming widely prevalent and are increasingly requesting access to wireless channels. The Institute of Electrical and Electronics Engineers (IEEE) is developing one or more standards that utilize Orthogonal Frequency-Division Multiple Access (OFDMA) in channel allocation. Other prior-art methods referring to establishing wireless communication paths in time-sensitive networking are disclosed in the patent publications US2020/084663A1 and WO2020/112008A1.

### BRIEF DESCRIPTION OF THE DRAWINGS

FIG. 1A is a network diagram illustrating an example network environment for WTSN redundancy, in accordance with one or more example embodiments of the present disclosure.
FIG. 1B shows an example of a TSN Centralized Configuration Model.
FIG. 2 shows an example of 802.3 layer 2 Ethernet packet and frame structure with 1cb redundancy-tag.
FIG. 3 shows one example network configured with both wired and wireless devices.
FIG. 4 shows an example of end to end frame replication and frame elimination.
FIG. 5a shows an example of IP and ARP encapsulation in 802.11.
FIG. 5b shows an example of IP, APR, VLAN-tagged IP or VLAN-tagged ARP translation between Ethernet frame and 802.11 frame.
FIG. 5c illustrates exemplarily proposed main protocol stack enhancements.
FIG. 6 shows an exemplary illustration of 802.1CB over 802.3 or 802.11 interfaces.
FIG. 7 shows an exemplary IP, ARP and HSR encapsulation in LPD 802.11.
FIG. 8 shows an exemplary illustration of protocol stack for the talker End system.
FIG. 9 shows an exemplary illustration of protocol stack for the listener End system.
FIG. 10 shows an exemplary illustration of protocol stack for the relay system.
FIG. 11 shows an exemplary illustration of protocol stack for the relay system.
FIG. 12 illustrates a flow diagram of illustrative process for an illustrative WTSN redundancy system, in accordance with one or more example embodiments of the present disclosure.
FIG. 13 illustrates a functional diagram of an exemplary communication station that may be suitable for use as a user device, in accordance with one or more example embodiments of the present disclosure.
FIG. 14 illustrates a block diagram of an example machine upon which any of one or more techniques (e.g., methods) may be performed, in accordance with one or more example embodiments of the present disclosure.
FIG. 15 is a block diagram of a radio architecture in accordance with some examples.
FIG. 16 illustrates an example front-end module circuitry for use in the radio architecture of FIG. 15, in accordance with one or more example embodiments of the present disclosure.
FIG. 17 illustrates an example radio IC circuitry for use in the radio architecture of FIG. 15, in accordance with one or more example embodiments of the present disclosure.
FIG. 18 illustrates an example baseband processing circuitry for use in the radio architecture of FIG. 15, in accordance with one or more example embodiments of the present disclosure.

### DETAILED DESCRIPTION

This invention is defined by the appended claims. The following description and the drawings sufficiently illustrate specific embodiments to enable those skilled in the art to practice them. Other embodiments may incorporate structural, logical, electrical, process, algorithm, and other changes. Portions and features of some embodiments may be included in, or substituted for, those of other embodiments.

An initial release of the wireless time sensitive networking (WTSN) stack is planned for Q4 2020 and will include 802.1AS time synchronization and 802.1Qbv time-aware scheduling capabilities. TSN redundancy is the next capability to be enabled over 802.11 in the roadmap and this disclosure describes the main solution for extending TSN redundancy over 802.11. The proposed solution is being implemented using Wi-Fi chips and once validated, it will be incorporated into future releases of the WTSN reference stack according to the IOTG roadmap. The proposed solution may also be incorporated into future WTSN standards to be defined in Avnu, WFA and/or IEEE.

A full solution is described to extend TSN redundancy over 802.11/Wi-Fi including protocol enhancements for the 802.11/Wi-Fi stack. The disclosure describes detailed implementation steps and minimal changes required in the 802.11 specification and implementation to enable encapsulation and translation of redundancy information between Ethernet and 802.11/Wi-Fi.

High-availability seamless redundancy (HSR), parallel redundancy protocol (PRP), and 802.1CB have defined the frame replication and elimination for high reliability (FRER) over Ethernet. Layer 3 solution can enable FRER over Wi-Fi but cannot be used for TSN integration which happens at layer 2. In order to integrate with wired TSN networks, a layer 2 approach executed by the 802.11 devices (including software + firmware + hardware) will be required.

Example embodiments of the present disclosure relate to systems, methods, and devices for redundancy over Wi-Fi for ultra-reliable wireless time sensitive networking.

In one embodiment, a WTSN redundancy system may extend the existing redundancy mechanisms from Ethernet TSN to Wi-Fi-based TSN by defining the following protocol enhancements:
1. Extend the current redundancy protocol implementation (HSR, PRP and 802.1CB) to support an interface to other 802 networks, such as 802.11.
2. Extend the 802.11 implementation of EtherType translation between Ethernet/IEEE Standard 802.3 and 802.11 to process new redundancy tag information and execute the required redundancy procedure as defined in the redundancy protocol (HSR, PRP or 802.1CB).
3. Adding extra network interface card in the same device or using a NIC supporting current dual band.
4. Enable QoS and High Reliability for Time critical Applications and to co-exist with other best effort network applications on the same edge node.
5. Lower the worst-case latency through higher reliability and thus enable more stringent and demanding time critical applications to go mobile (wire free).

The above descriptions are for purposes of illustration and are not meant to be limiting. Numerous other examples, configurations, processes, algorithms, etc., may exist, some of which are described in greater detail below. Example embodiments will now be described with reference to the accompanying figures.

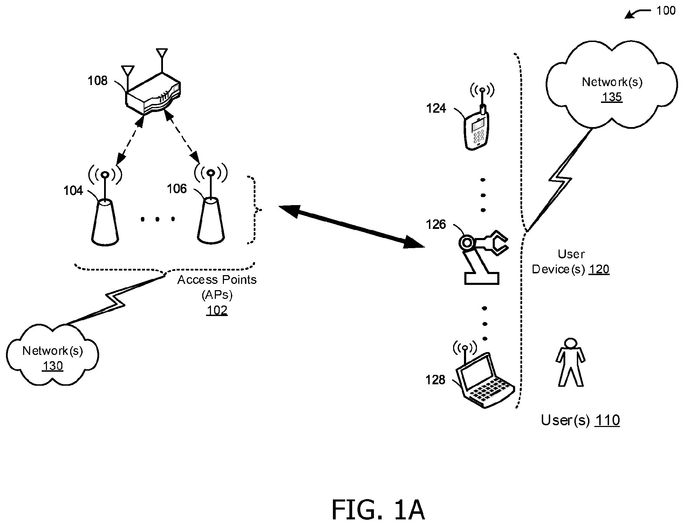

FIG. 1A is a network diagram illustrating an example network environment of WTSN redundancy, according to some example embodiments of the present disclosure. Wireless network 100 may include one or more user devices 120 and one or more access points(s) (AP) 102, which may communicate in accordance with IEEE 802.11 communication standards. The user device(s) 120 may be mobile devices that are non-stationary (e.g., not having fixed locations) or may be stationary devices.

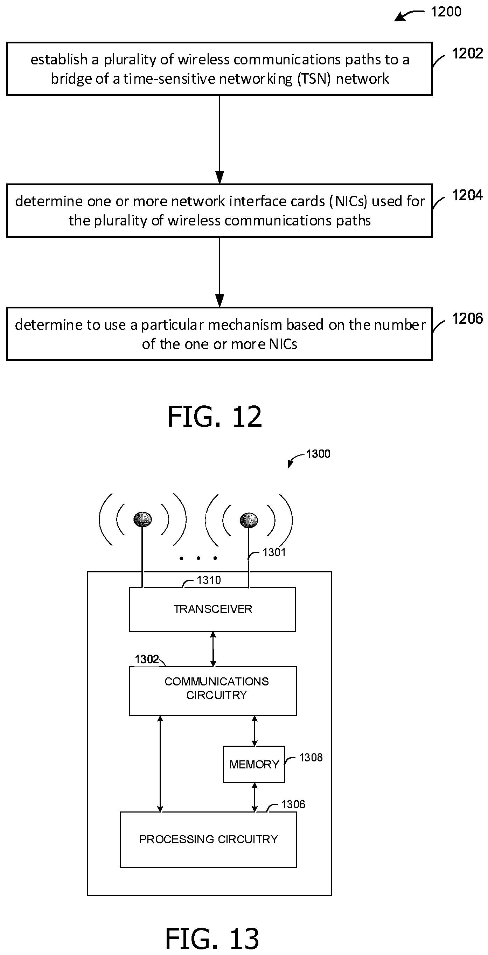

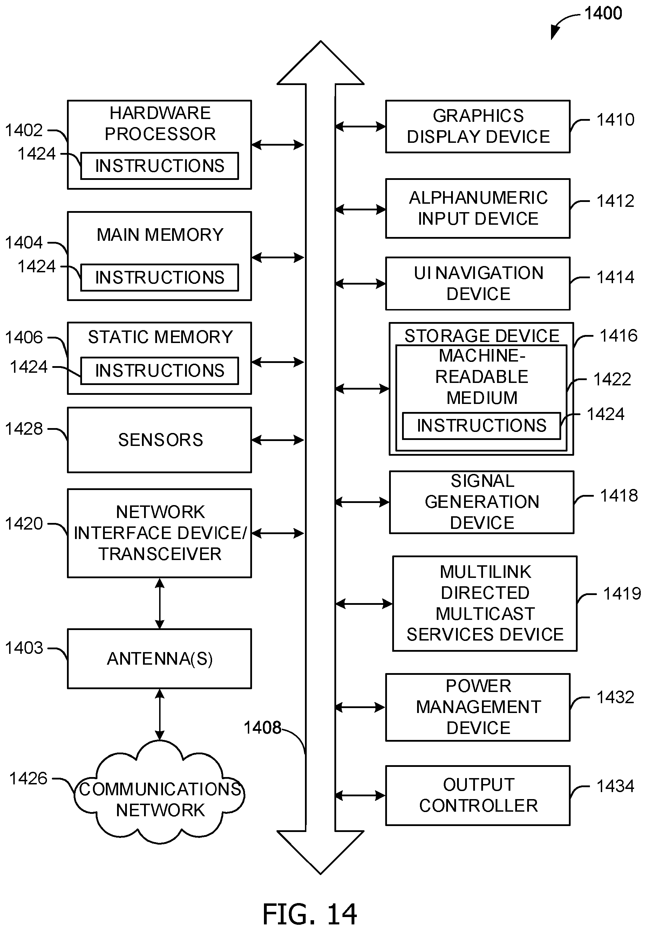

In some embodiments, the user devices 120 and the AP 102 may include one or more computer systems similar to that of the functional diagram of FIG. 13 and/or the example machine/system of FIG. 14.

One or more illustrative user device(s) 120 and/or AP(s) 102 may be operable by one or more user(s) 110. It should be noted that any addressable unit may be a station (STA). An STA may take on multiple distinct characteristics, each of which shape its function. For example, a single addressable unit might simultaneously be a portable STA, a quality-of-service (QoS) STA, a dependent STA, and a hidden STA. The one or more illustrative user device(s) 120 and the AP(s) 102 may be STAs. The one or more illustrative user device(s) 120 and/or AP(s) 102 may operate as a personal basic service set (PBSS) control point/access point (PCP/AP). The user device(s) 120 (e.g., 124, 126, or 128) and/or AP(s) 102 may include any suitable processor-driven device including, but not limited to, a mobile device or a non-mobile, e.g., a static device. For example, user device(s) 120 and/or AP(s) 102 may include, a user equipment (UE), a station (STA), an access point (AP), a software enabled AP (SoftAP), a personal computer (PC), a wearable wireless device (e.g., bracelet, watch, glasses, ring, etc.), a desktop computer, a mobile computer, a laptop computer, an ultrabook^{™} computer, a notebook computer, a tablet computer, a server computer, a handheld computer, a handheld device, an internet of things (IoT) device, a sensor device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "carry small live large" (CSLL) device, an ultra mobile device (UMD), an ultra mobile PC (UMPC), a mobile internet device (MID), an "origami" device or computing device, a device that supports dynamically composable computing (DCC), a context-aware device, a video device, an audio device, an A/V device, a set-top-box (STB), a blu-ray disc (BD) player, a BD recorder, a digital video disc (DVD) player, a high definition (HD) DVD player, a DVD recorder, a HD DVD recorder, a personal video recorder (PVR), a broadcast HD receiver, a video source, an audio source, a video sink, an audio sink, a stereo tuner, a broadcast radio receiver, a flat panel display, a personal media player (PMP), a digital video camera (DVC), a digital audio player, a speaker, an audio receiver, an audio amplifier, a gaming device, a data source, a data sink, a digital still camera (DSC), a media player, a smartphone, a television, a music player, or the like. Other devices, including smart devices such as lamps, climate control, car components, household components, appliances, etc. may also be included in this list.

In one or more embodiments, a controller 108 (e.g., a wireless TSN controller) may facilitate enhanced coordination among multiple APs (e.g., AP 104 and AP 106). The controller 108 may be a central entity or another AP, and may be responsible for configuring and scheduling time sensitive control and data operations across the APs. A wireless TSN (WTSN) management protocol may be used to facilitate enhanced coordination between the APs, which may be referred to as WTSN management clients in such context. The controller 108 may enable device admission control (e.g., control over admitting devices to a WTSN), joint scheduling, network measurements, and other operations. APs may be configured to follow the WTSN protocol.

In one or more embodiments, the use of controller 108 may facilitate AP synchronization and alignment for control and data transmissions to ensure latency with high reliability for time sensitive applications on a shared time sensitive data channel, while enabling coexistence with non-time sensitive traffic in the same network.

In one or more embodiments, the controller 108 and its coordination may be adopted in future Wi-Fi standards for new bands (e.g., 6-7 GHz), in which additional requirements of time synchronization and scheduled operations may be used. Such application of the controller 1 108 may be used in managed Wi-Fi deployments (e.g., enterprise, industrial, managed home networks, etc.) in which time sensitive traffic may be steered to a dedicated channel in existing bands as well as new bands.

As used herein, the term "Internet of Things (IoT) device" is used to refer to any object (e.g., an appliance, a sensor, etc.) that has an addressable interface (e.g., an Internet protocol (IP) address, a Bluetooth identifier (ID), a near-field communication (NFC) ID, etc.) and can transmit information to one or more other devices over a wired or wireless connection. An IoT device may have a passive communication interface, such as a quick response (QR) code, a radio-frequency identification (RFID) tag, an NFC tag, or the like, or an active communication interface, such as a modem, a transceiver, a transmitter-receiver, or the like. An IoT device can have a particular set of attributes (e.g., a device state or status, such as whether the IoT device is on or off, open or closed, idle or active, available for task execution or busy, and so on, a cooling or heating function, an environmental monitoring or recording function, a light-emitting function, a sound-emitting function, etc.) that can be embedded in and/or controlled/monitored by a central processing unit (CPU), microprocessor, ASIC, or the like, and configured for connection to an IoT network such as a local ad-hoc network or the Internet. For example, IoT devices may include, but are not limited to, refrigerators, toasters, ovens, microwaves, freezers, dishwashers, dishes, hand tools, clothes washers, clothes dryers, furnaces, air conditioners, thermostats, televisions, light fixtures, vacuum cleaners, sprinklers, electricity meters, gas meters, etc., so long as the devices are equipped with an addressable communications interface for communicating with the IoT network. IoT devices may also include cell phones, desktop computers, laptop computers, tablet computers, personal digital assistants (PDAs), etc. Accordingly, the IoT network may be comprised of a combination of "legacy" Internet-accessible devices (e.g., laptop or desktop computers, cell phones, etc.) in addition to devices that do not typically have Internet-connectivity (e.g., dishwashers, etc.).

The user device(s) 120 and/or AP(s) 102 may also include mesh stations in, for example, a mesh network, in accordance with one or more IEEE 802.11 standards and/or 3GPP standards.

Any of the user device(s) 120 (e.g., user devices 124, 126, 128), and AP(s) 102 may be configured to communicate with each other via one or more communications networks 130 and/or 135 wirelessly or wired. The user device(s) 120 may also communicate peer-to-peer or directly with each other with or without the AP(s) 102. Any of the communications networks 130 and/or 135 may include, but not limited to, any one of a combination of different types of suitable communications networks such as, for example, broadcasting networks, cable networks, public networks (e.g., the Internet), private networks, wireless networks, cellular networks, or any other suitable private and/or public networks. Further, any of the communications networks 130 and/or 135 may have any suitable communication range associated therewith and may include, for example, global networks (e.g., the Internet), metropolitan area networks (MANs), wide area networks (WANs), local area networks (LANs), or personal area networks (PANs). In addition, any of the communications networks 130 and/or 135 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, white space communication mediums, ultra-high frequency communication mediums, satellite communication mediums, or any combination thereof.

Any of the user device(s) 120 (e.g., user devices 124, 126, 128) and AP(s) 102 may include one or more communications antennas. The one or more communications antennas may be any suitable type of antennas corresponding to the communications protocols used by the user device(s) 120 (e.g., user devices 124, 126 and 128), and AP(s) 102. Some non-limiting examples of suitable communications antennas include Wi-Fi antennas, Institute of Electrical and Electronics Engineers (IEEE) 802.11 family of standards compatible antennas, directional antennas, non-directional antennas, dipole antennas, folded dipole antennas, patch antennas, multiple-input multiple-output (MIMO) antennas, omnidirectional antennas, quasi-omnidirectional antennas, or the like. The one or more communications antennas may be communicatively coupled to a radio component to transmit and/or receive signals, such as communications signals to and/or from the user devices 120 and/or AP(s) 102.

Any of the user device(s) 120 (e.g., user devices 124, 126, 128), and AP(s) 102 may be configured to perform directional transmission and/or directional reception in conjunction with wirelessly communicating in a wireless network. Any of the user device(s) 120 (e.g., user devices 124, 126, 128), and AP(s) 102 may be configured to perform such directional transmission and/or reception using a set of multiple antenna arrays (e.g., DMG antenna arrays or the like). Each of the multiple antenna arrays may be used for transmission and/or reception in a particular respective direction or range of directions. Any of the user device(s) 120 (e.g., user devices 124, 126, 128), and AP(s) 102 may be configured to perform any given directional transmission towards one or more defined transmit sectors. Any of the user device(s) 120 (e.g., user devices 124, 126, 128), and AP(s) 102 may be configured to perform any given directional reception from one or more defined receive sectors.

MIMO beamforming in a wireless network may be accomplished using RF beamforming and/or digital beamforming. In some embodiments, in performing a given MIMO transmission, user devices 120 and/or AP(s) 102 may be configured to use all or a subset of its one or more communications antennas to perform MIMO beamforming.

Any of the user devices 120 (e.g., user devices 124, 126, 128), and AP(s) 102 may include any suitable radio and/or transceiver for transmitting and/or receiving radio frequency (RF) signals in the bandwidth and/or channels corresponding to the communications protocols utilized by any of the user device(s) 120 and AP(s) 102 to communicate with each other. The radio components may include hardware and/or software to modulate and/or demodulate communications signals according to pre-established transmission protocols. The radio components may further have hardware and/or software instructions to communicate via one or more Wi-Fi and/or Wi-Fi direct protocols, as standardized by the Institute of Electrical and Electronics Engineers (IEEE) 802.11 standards. In certain example embodiments, the radio component, in cooperation with the communications antennas, may be configured to communicate via 2.4 GHz channels (e.g. 802.11b, 802.11g, 802.11n, 802.11ax), 5 GHz channels (e.g. 802.11n, 802.11ac, 802.11ax), or 60 GHZ channels (e.g. 802.11ad, 802.11ay). 800 MHz channels (e.g. 802.11ah). The communications antennas may operate at 28 GHz and 40 GHz. It should be understood that this list of communication channels in accordance with certain 802.11 standards is only a partial list and that other 802.11 standards may be used (e.g., Next Generation Wi-Fi, or other standards). In some embodiments, non-Wi-Fi protocols may be used for communications between devices, such as Bluetooth, dedicated short-range communication (DSRC), Ultra-High Frequency (UHF) (e.g. IEEE 802.11af, IEEE 802.22), white band frequency (e.g., white spaces), or other packetized radio communications. The radio component may include any known receiver and baseband suitable for communicating via the communications protocols. The radio component may further include a low noise amplifier (LNA), additional signal amplifiers, an analog-to-digital (A/D) converter, one or more buffers, and digital baseband.

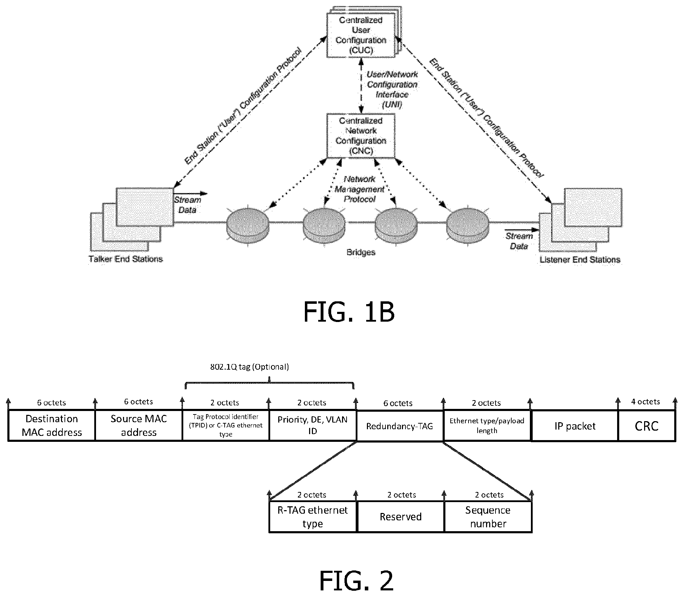

In one embodiment, and with reference to FIG. 1, AP 102 may facilitate WTSN redundancy 142 with one or more user devices 120.

It is understood that the above descriptions are for purposes of illustration and are not meant to be limiting.

FIGs. 1B-11 depict illustrative schematic diagrams for WTSN redundancy, in accordance with one or more example embodiments of the present disclosure.

The IEEE 802.1 TSN standards are being developed to enable time synchronization, guarantee latency and high reliability through bandwidth reservation, time-aware scheduling and redundancy. However, most of the TSN standards have been restricted to wired (Ethernet) networks. Enabling time-critical industrial applications over wireless links would add value and open up new markets, such as software-defined machines and autonomous industrial systems and factories of the future. Frame replication and elimination was defined in 802.1CB to enable high reliability in TSN, which was only defined for wired (Ethernet) networks. In the future, wired and wireless (Wi-Fi-based) links are expected to be part of the same network, therefore there is a need to extend the existing redundancy mechanisms from Ethernet to Wi-Fi links.

FIG. 1B shows an example of a TSN Centralized Configuration Model.

### Redundancy for TSN application on wired networks:

To enable redundancy for TSN application in Ethernet based networks, the 802.1CB, 802.1Qcc and 802.1Qca standards need to operate jointly. 802.1Qcc defines a fully centralized configuration model that allows all-knowing, centralized software controller to receive stream requirements from talkers and listeners and to directly configure the relevant bridges to meet those requirements. FIG. 1B showed the 802.1Qcc fully centralized configuration mode. 802.1Qca defines the path control and reservation, which working with the 802.1Qcc enables redundancy path selection and reservation from the talker to the listener based on the QoS requirements and also the network information reported from the end devices and the bridges. To indicate the selected path information for the frame forwarding, an 802.1Q tag with VLAN ID information is inserted in the 802.3 Ethernet frame as shown in FIG. 2. As a result, when the relay received a new frame, it can base on the VLAN ID information to identify on which Ethernet port it should forward the received packet. 802.1CB specifies procedures, managed objects and protocols for bridges and end stations that provide, 1) Identification and replication of frames, for redundant transmission; 2) Identification and elimination of duplicate frames, for redundant reception. To identify duplicated frame, a redundancy tag with sequence number information is added in the mac header of 802.3 Ethernet frame as shown in FIG. 2. As a result, when the end device or the relay received a new frame, it can base on the destination MAC address and the sequence number information indicated in the redundancy tag to determine whether it is a frame it has received before. If it is a duplicated frame, it will be eliminated, and no further process will be initiated.

FIG. 2 shows an example of 802.3 layer 2 Ethernet packet and frame structure with 1cb redundancy-tag.

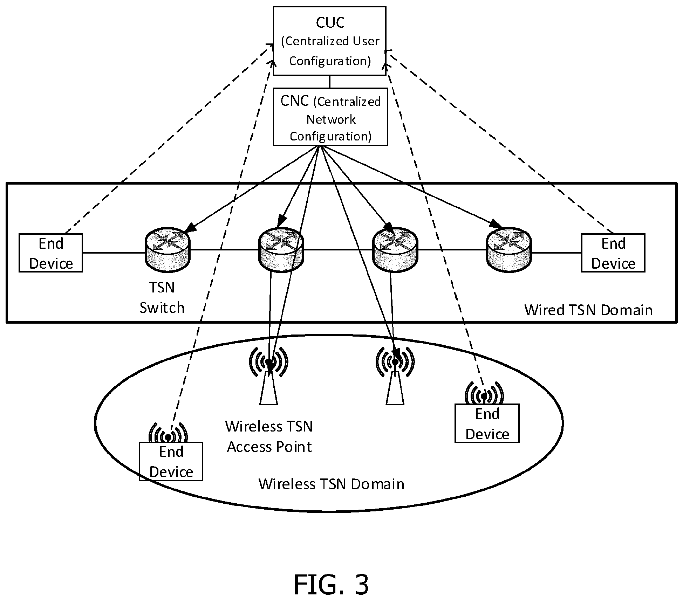

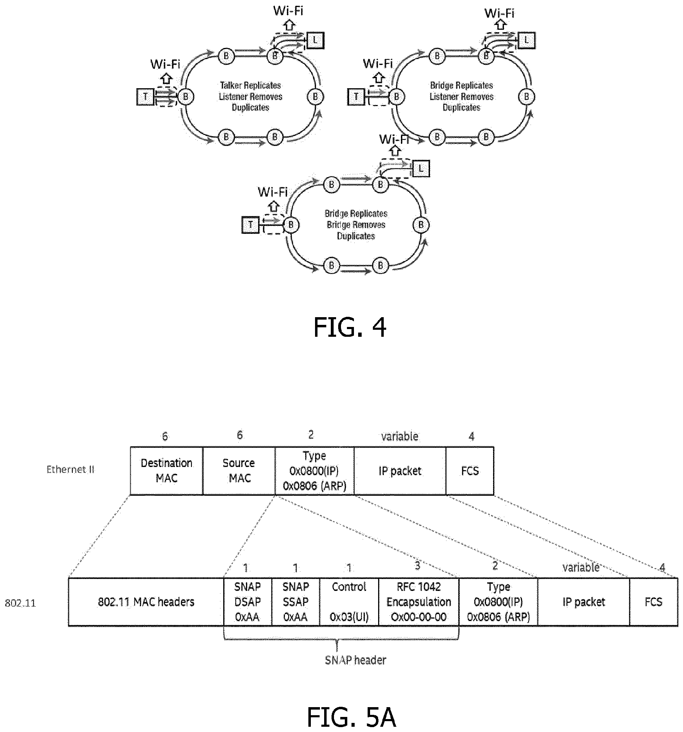

FIG. 3 shows one example network configured with both wired and wireless devices, which is captured as Wired TSN Domain and Wireless TSN domain. Existing TSN redundancy solutions (e.g. 802.1CB) is designed for wired networks in different configurations as shown in FIG. 4. In the case the end devices are connecting to the network through wireless links (e.g. Talkers and Listeners in FIG. 4), the current redundancy protocol is not able to extend redundancy capabilities to the wireless links, where it is most needed, given the typical challenges with wireless communications.

More specifically, when the talker sends data to the listener over two redundancy paths as shown in FIG. 4, and if the communication between the talker/listener and the bridge is happening over Wi-Fi, there is no solution to send or forward the Ethernet/Wi-Fi frame with redundancy tag and VLAN tag information over Wi-Fi/Ethernet to the listener for packet elimination.

The solution proposed in this disclosure enables the talk/listener (T/L) connected with the bridge (B) over Wi-Fi to communicate with the bridge over multiple different channels. This solution may be implemented using a single Wi-Fi Network Interface (NIC), or multiple Wi-Fi NICs. If a single NIC is used, multiple channel transmissions can be achieved through time-division and fast channel switching or through concurrent dual band communications, depending on the Wi-Fi Si support. If dual NICs are used, multiple links can be established simultaneously.

FIG. 3 includes a WTSN Centralized Configuration Model.

FIG. 4 shows an example of end to end frame replication and frame elimination.

In an 802.11 data frame, there is a Sequence Control field for the sequence number information, however it is for point to point (link layer) transmission. A sequence number field for end to end frame replication and elimination is required over a Wi-Fi link in order to integrate the Wi-Fi/802.11 links as part of a broader TSN infrastructure that supports path redundancy based on the 802.1CB standard.

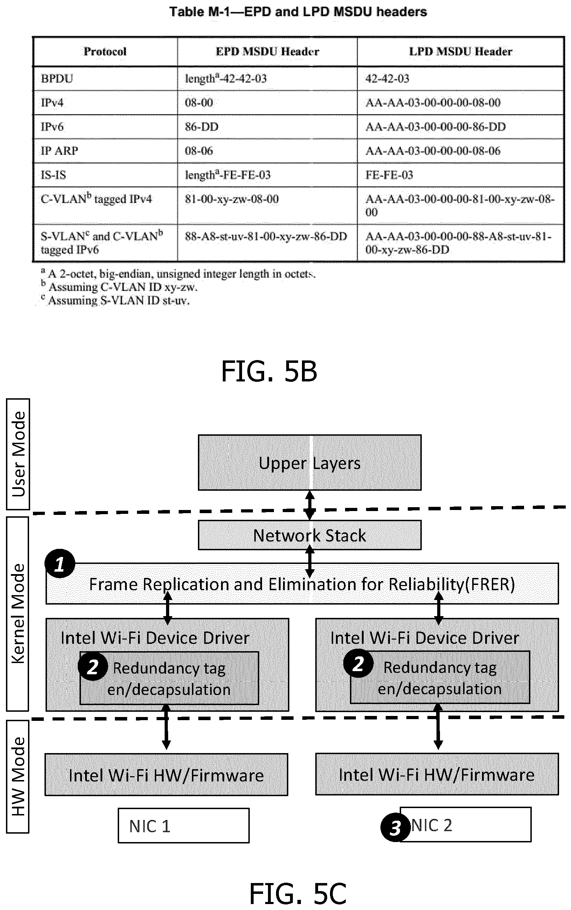

As Ethernet, 802.11 can transport any network-layer protocol. However, unlike Ethernet, 802.11 relies on 802.2 logical link control (LLC) encapsulation to carry higher-level protocols. A standard for transmission of Internet protocol (IP) datagrams over IEEE 802 networks is defined. The encapsulation of the IP or address resolution protocol (ARP) in 802.11 frame is as shown in FIG. 5. A sub-network access protocol (SNAP) header with the type field is inserted between the 802.11 MAC header and the IP packet.

FIG. 5a shows an example of IP and ARP encapsulation in 802.11.

On the other hand, it was also defined that the IP, APR, VLAN-tagged IP or VLAN-tagged ARP translation between Ethernet frame and 802.11 frame as shown in FIG. 5b.

FIG. 5c illustrates the main protocol stack enhancements proposed in the disclosure to enable seamless TSN redundancy from Ethernet to 802.11.

The proposed solution may be proposed as a new Wireless TSN redundancy profile for 802.11 as part of Avnu Alliance and/or Wi-Fi Alliance. The required changes to the 802.11 devices may be defined as part of the WTSN redundancy profile given the minimal changes required to the 802.11 spec (a new value in the 802.11 to 802.3/Ethernet translation tables as described above). Optionally, the changes may also be introduced in a future revision of the 802.11 specification.

This disclosure is mainly focusing on how to enable redundancy for WTSN, the centralized scheduling with redundancy path selection and reservation is assumed to be configured already in the following description. As shown in FIG. 4, it is assumed that there is a time-sensitive traffic stream from the talker to the listener. This disclosure enables the extension of the frame duplication mechanism to the Wi-Fi Devices (talker, listener and bridge) in order to obtain over the air redundancy, as the talker or listener may send or receive data over different channels to or from the bridge.

Note: This general solution works for 802.1CB, PRP, HSR and other EtherType protocols over 802 networks including 802.11. An example with 802.1CB over 802.11 will be used in this disclosure to illustrate the solution.

Extend the current redundancy protocol implementation (HSR, PRP and 802.1CB) to support an interface to other 802 networks, such as 802.11.

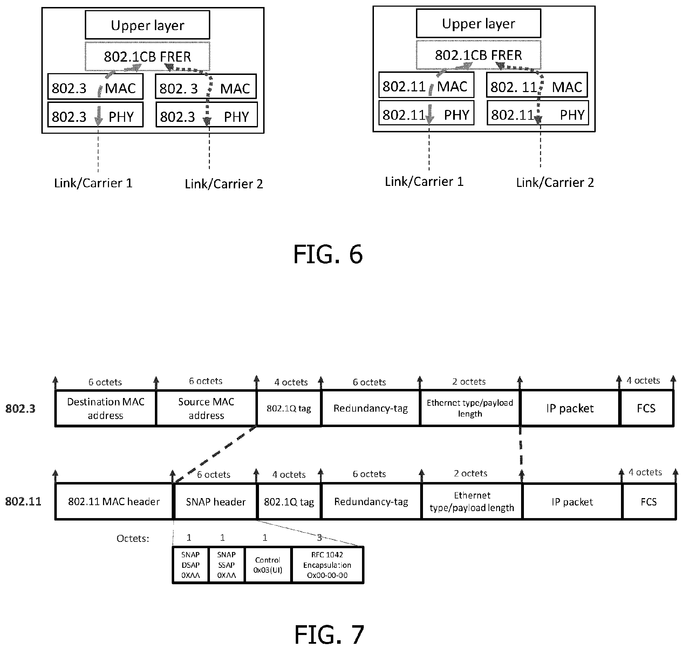

Extend the redundancy protocol implementation (the HSR, PRP and 802.1CB) to interface to all 802 networks, such as 802.3 and 802.11. The current HSR, PRP or 802.1CB was defined for Ethernet, as a result all of them are implemented with interface limitation and only support Ethernet interface. In this disclosure, the current implementation is extended to support an interface to 802.11. As shown in FIG. 6 using 802.1CB as an example, the 802.1CB is operating over 802.3 and/or 802.11 interface.

FIG. 6 shows an exemplary illustration of 802.1CB over 802.3 or 802.11 interfaces.

Extend the current translation between Ethernet/IEEE Std 802.3 and 802.11 for HSR, PRP and 802.1CB protocol.

In the Ethernet/IEEE Std 802.3 to/from IEEE Std 802.11 table as shown in Table M-1 in 802.11, EtherType for redundancy tag with 802.1CB as an example will be added as shown following:

**Table M-1 Modification - EPD and LPD MSDU Header (11ak)**

| **Protocol** | **EPD MSDU Header** | **LPD MSDU Header** |
|---|---|---|
| BPDU | length^{a} -42-42-03 | 42-42-03 |
| IPv4 | 08-00 | AA-AA-AA-03-00-00-00-08-00 |
| IPv6 | 86-DD | AA-AA-AA-03-00-00-00-86-DD |
| IP ARP | 08-06 | AA-AA-AA-03-00-00-00-08-06 |
| IS-IS | length^{a} -FE-FE-03 | FE-FE-03 |
| C-VLAN^{b} Tagged IPv4 | 81-00-xy-zw-08-00 | AA-AA-AA-03-00-00-00-81-00-xy-zw-08-00 |
| S-VLAN^{c} and C-VLAN^{b} Tagged IPv6 | 88-A8-st-uv-81-00-xy-zw-86-DD | AA-AA-AA-03-00-00-00-88-A8-st-uv-81-00-xy-zw-86-DD |
| C-VLAN^{b} 802.1CB^{d} Tagged IPv4 | 81-00-xy-zw-F1-C1-xx-xx-xx-xx-08-00 | AA-AA-AA-03-00-00-00-81-00-xy-zw-F1-C1-xx-xx-xx-xx-08-00 |

| | | |
|---|---|---|
| ^{a} 2-Octet, big endian, unsigned integer length in octets ^{b} Assuming C-LAN ID xy-zw ^{c} Assuming S-VLAN ID st-uv ^{d} Assuming 802.1CB ID xx-xx-xx-xx | | |

FIG. 7 shows an exemplary IP, ARP and HSR encapsulation in LPD 802.11.

Adding an extra network interface card (NIC) in the same device or using a NIC supporting current dual band to support redundancy over two different channels to mitigate the effect coming from interference over the air.

Enable QoS and High Reliability for Time critical Applications and to co-exist with other best effort network applications on the same edge node.

Lower the worst case latency through higher reliability and thus enable more stringent and demanding time critical applications to go mobile(wire free).

In this example, it is illustrated how to extend the existing 802.1CB implementation to support frame duplication and elimination for high reliability over Wi-Fi.

### Talker end system:

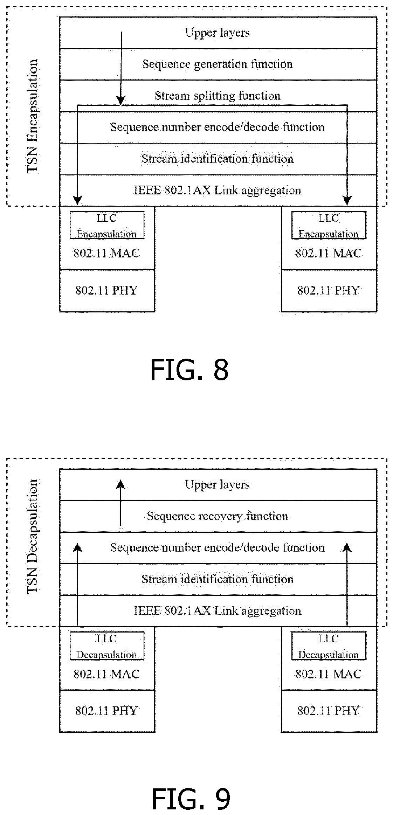

The Wi-Fi device operating as a talker may be able to operate over multiple different channels simultaneously with multiple radios within a single network interface (NIC), or simultaneously with multiple NICs, or in series by doing channel switching with single radio. When 802.1CB receives an Ethernet frame from the network stack, it will do "TSN encapsulation" to carry the redundancy tag in the 802.3/Ethernet frame as shown in FIG. 8, which has been defined in the existing 802.1CB implementation.

Each frame in a compound stream will be assigned a sequence number sub-parameter value by the sequence generation function when it is passed down to the lower layers.

In the stream splitting function, each frame will be replicated and given two stream handle sub-parameter values. The two different stream handles results in the two frames being assigned two different VLAN IDs.

The sequence number encode/decode function is responsible for inserting the sequence number sub parameter into the frame and extracting from the frame. It will:
Encode the sequence number sub-parameter to the Sequence Number field of the redundancy tag information and fill the Reserved field with zeros.

Insert an EtherType and Redundancy tag information as the first octets of the MSDU parameter after the 802.3 MAC header, thus increasing the size of the MSDU parameters by 6 octets.

Based on this two different VLAN IDs, the two duplicated frames are passed down to two different 802.11 MAC by the IEEE 802.1AX link aggregation. This will be done simultaneously or in time-division based on whether the Wi-Fi device is able to operate at multiple channels at the same time. Note: there is a mapping table between the VLAN ID and the SS ID in each Wi-Fi device.

Note, the VLAN, IP or ARP tag encapsulation/decapsulation may be done by another function, which will not be descried in this disclosure.

The "LLC encapsulation/decapsulation" is in charge of the redundancy tag encapsulation/decapsulation when the Ethernet frame is translated to/from 802.11 frame. In the "LLC encapsulation", for the Ethernet frame received from the upper layers, the first two octets of the MSDU following the 802.3 MAC header will be examined for equality with the redundancy tag EtherType. If it is equal, the "LLC encapsulation" will do following processes as shown in FIG. 6:
Extract the first 6 octets of the MSDU after the 802.3 MAC header.

Insert the SNAP header with this 6 octets redundancy tag as the first octets of the MSDU parameter after the 802.11 MAC header in the generated 802.11 frame, thus increasing the size of the MSDU parameters by 6 octets.

Note, "LLC encapsulation" is also responsible for identifying IP, ARP and VLAN tag and its translation from Ethernet frame to 802.11 frame, which are already standardized in RFC 1042 and 802.11 standard, and will not be described here.

FIG. 8 shows an exemplary illustration of protocol stack for the talker End system.

Listener end system.

The Wi-Fi device operating as a listener may be able to operate over multiple different channels simultaneously with multiple radios within a single network interface (NIC), or simultaneously with multiple NICs, or in series by doing channel switching with single radio. In the "LLC decapsulation", when the new received Wi-Fi packet is translated back to the Ethernet frame, the first two octets of the LLC header will be examined for equality with "AA" or "AB", and the OUI will be examined for equality with "000000". If they are equal, the first two octets of the MSDU following the LLC header will be examined for equality with the redundancy tag EtherType. If it is equal, the "LLC decapsulation" will do following processes:

Extract the first 6 octets of the MSDU after the 802.11 LLC header.

Insert this 6 octets redundancy tag as the first octets of the MSDU parameter after the 802.3 MAC header in the generated Ethernet frame and ignore the SNAP header, thus decreasing the size of the MSDU parameters by 6 octets.

Note, the "LLC decapsulation" is also responsible for identifying IP, ARP and VLAN tag and its translation from 802.11 frame to Ethernet frame, which are already standardized in RFC 1042 and 802.11 standard, and will not be described here.

The sequence number encode/decode function is responsible for inserting the sequence number sub parameter into the frame and extracting from the frame. After identifying this is a frame with redundancy tag, the first 6 octets of the MSDU will be removed, and the size of the MAC payload will be shorted by 6 octets. The Sequence Number field of the Redundancy tag information will be copied to the sequence number sub-parameter and the contents of the reserved field will be ignored.

The sequence number sub-parameter extracted from the Ethernet frame with the destination MAC address will be used by the sequence recovery function for frame elimination. If it is a duplicated frame, it will be eliminated by the Sequence recovery function, otherwise, it will be forwarded to the upper layers.

FIG. 9 shows an exemplary illustration of protocol stack for the listener End system.

### Relay system:

Case 1: The Wi-Fi device is operating as relay and forwarding a frame received over Ethernet to the next hop device over Wi-Fi.

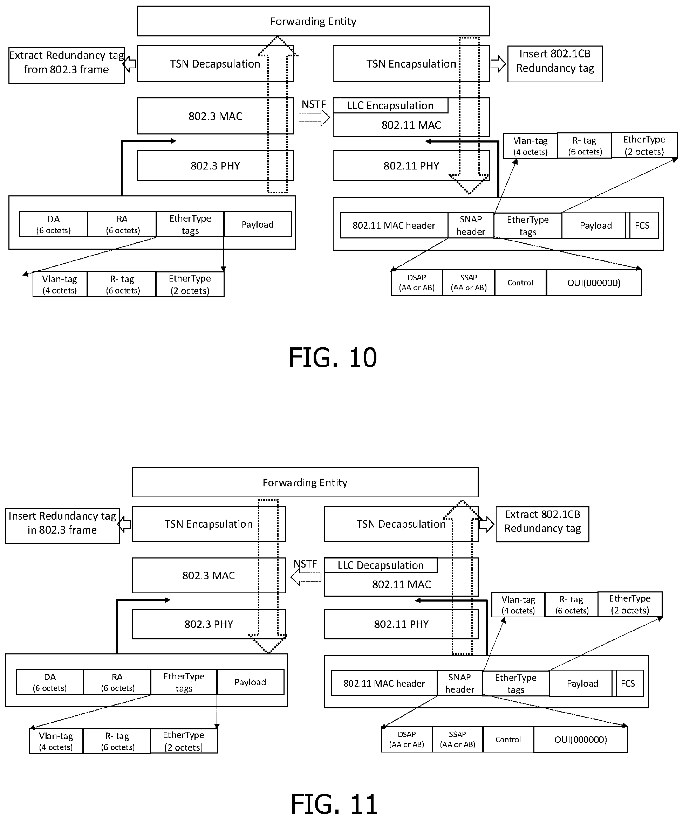

FIG. 10 shows an exemplary illustration of protocol stack for the relay system.

As shown in FIG. 10, when the Wi-Fi device receives the Ethernet frame, it will follow the 802.1CB to do "TSN Decapsulation", which including stream identification, sequence decode and sequence recovery function. The size of the MSDU (MAC service data unit) of the Ethernet frame should be shorted by 6 octets after the "TSN Decapsulation". If the received frame is a duplicated frame, it will be eliminated by the sequence recovery function. Otherwise, it will be forwarded to the next hop device (the relay is connected to the next hop device with Wi-Fi.) over Wi-Fi after the "TSN encapsulation", which include the sequence number encode/decode function and stream Identification function, and "LLC encapsulation" as shown in FIG. 8.

Note, the "LLC decapsulation" is also responsible for identifying IP, ARP and VLAN tag and its translation from 802.11 frame to Ethernet frame, which are already standardized in RFC 1042 and 802.11 standard, and will not be described here.

Based on the VLAN ID, which is obtained from the MAC header of the Ethernet frame, and the mapping table between the VLAN ID and the SS ID, the relay will forward the data frame to the next hop device with the mapping SS ID. Note: there is a mapping table between the VLAN ID and the SS ID in each Wi-Fi device. This is similar to the mapping table between the VLAN ID and the Ethernet port number in each Ethernet device.

If the relay is able to operate over multiple different channels simultaneously with multiple radios within a single network interface (NIC), or simultaneously with multiple NICs, or in series by doing channel switching with single radio, it can replicate the received Ethernet frame and send these two frames over two different channels through stream splitting function, sequence number encode/decode function, stream identification function and IEEE 802.1AX link aggregation, as described in the talker end system section.

Case 2: The Wi-Fi device is operating as relay and forwarding a frame received over Wi-Fi to the next hop device over Ethernet.

FIG. 11 shows an exemplary illustration of protocol stack for the relay system.

As shown in FIG. 11, when the relay receives a Wi-Fi packet, it will do "LLC Decapsulation" and "TSN Decapsulation", which including stream identification, sequence number decode/encode function and sequence recovery function as shown in FIG. 8.

In the "LLC decapsulation", when the new received Wi-Fi packet is translated back to the Ethernet frame, the first two octets of the LLC header will be examined for equality with "AA" or "AB", and the OUI will be examined for equality with "000000". If they are equal, the first two octets of the MSDU following the LLC header will be examined for equality with the redundancy tag EtherType. If it is equal, the "LLC decapsulation" will do following processes:

Extract the first 6 octets of the MSDU after the 802.11 LLC header,
Insert this 6 octets redundancy tag as the first octets of the MSDU parameter after the 802.3 MAC header in the generated Ethernet frame and ignore the SNAP header, thus decreasing the size of the MSDU parameters by 6 octets.

Note, the "LLC decapsulation" is also responsible for identifying IP, ARP and VLAN tag and its translation from 802.11 frame to Ethernet frame, which are already standardized in RFC 1042 and 802.11 standard, and will not be described here.

The sequence number encode/decode function is responsible for inserting the sequence number sub parameter into the frame and extracting from the frame. After identifying this is a frame with redundancy tag, the first 6 octets of the MSDU will be removed, and the size of the MAC payload will be shorted by 6 octets. The Sequence Number field of the Redundancy tag information will be copied to the sequence number sub-parameter and the contents of the reserved field will be ignored.

The sequence number sub-parameter extracted from the Ethernet frame with the destination MAC address will be used by the sequence recovery function for frame elimination. If it is a duplicated frame, it will be eliminated by the Sequence recovery function, otherwise, it will be forwarded to the next hop device (The relay is connected to the next hop device with Ethernet.) over Ethernet after the "TSN encapsulation", which including the following procedures:
Encoding the sequence number sub-parameter to the Sequence Number field of the redundancy tag information and filling the Reserved field with zeros.

Inserting an EtherType and Redundancy tag information as the first octets of the MSDU parameter after the 802.3 MAC header, thus increasing the size of the MSDU parameters by 6 octets.

Note, the VLAN, IP or ARP tag encapsulation/decapsulation may be done by another function, which will not be descried in this disclosure.

Based on the VLAN ID and the mapping table between the VLAN ID and the Ethernet port number, the relay will forward the data frame to the next hop device with the mapping Ethernet port number. Note: there is a mapping table between the VLAN ID and the Ethernet port number in each Ethernet device.

The VLAN, IP or ARP tag translation between the Ethernet frame and 802.11 frame will be done according to the table M-1 in 802.11 standard.

If the relay has two Wi-Fi network interfaces, it can replicate the received Ethernet frame and send these two frames over two different network interfaces through stream splitting function, sequence number encode/decode function, stream identification function and IEEE 802.1AX link aggregation, as described in the talker end system section.

It is understood that the above descriptions are for purposes of illustration and are not meant to be limiting.

FIG. 12 illustrates a flow diagram of illustrative process 1200 for a WTSN redundancy system, in accordance with one or more example embodiments of the present disclosure.

At block 1202, a device (e.g., the user device(s) 120 and/or the AP 102 of FIG. 1 and/or the WTSN redundancy device 1419 of FIG. 14) may establish a plurality of wireless communications paths to a bridge of a time-sensitive networking (TSN) network.

At block 1204, the device may determine one or more network interface cards (NICs) used for the plurality of wireless communications paths.

At block 1206, the device may determine to use a particular mechanism based on the number of the one or more NICs.

It is understood that the above descriptions are for purposes of illustration and are not meant to be limiting.

FIG. 13 shows a functional diagram of an exemplary communication station 1300, in accordance with one or more example embodiments of the present disclosure. In one embodiment, FIG. 13 illustrates a functional block diagram of a communication station that may be suitable for use as an AP 102 (FIG. 1) or a user device 120 (FIG. 1) in accordance with some embodiments. The communication station 1300 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 1300 may include communications circuitry 1302 and a transceiver 1310 for transmitting and receiving signals to and from other communication stations using one or more antennas 1301. The communications circuitry 1302 may include circuitry that can operate the physical layer (PHY) communications and/or medium access control (MAC) communications for controlling access to the wireless medium, and/or any other communications layers for transmitting and receiving signals. The communication station 1300 may also include processing circuitry 1306 and memory 1308 arranged to perform the operations described herein. In some embodiments, the communications circuitry 1302 and the processing circuitry 1306 may be configured to perform operations detailed in the above figures, diagrams, and flows.

In accordance with some embodiments, the communications circuitry 1302 may be arranged to contend for a wireless medium and configure frames or packets for communicating over the wireless medium. The communications circuitry 1302 may be arranged to transmit and receive signals. The communications circuitry 1302 may also include circuitry for modulation/demodulation, upconversion/downconversion, filtering, amplification, etc. In some embodiments, the processing circuitry 1306 of the communication station 1300 may include one or more processors. In other embodiments, two or more antennas 1301 may be coupled to the communications circuitry 1302 arranged for sending and receiving signals. The memory 1308 may store information for configuring the processing circuitry 1306 to perform operations for configuring and transmitting message frames and performing the various operations described herein. The memory 1308 may include any type of memory, including non-transitory memory, for storing information in a form readable by a machine (e.g., a computer). For example, the memory 1308 may include a computer-readable storage device, read-only memory (ROM), random-access memory (RAM), magnetic disk storage media, optical storage media, flash-memory devices and other storage devices and media.

In some embodiments, the communication station 1300 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 1300 may include one or more antennas 1301. The antennas 1301 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 1300 may include one or more of a keyboard, a display, a non-volatile memory port, multiple antennas, a graphics processor, an application processor, speakers, and other mobile device elements. The display may be an LCD screen including a touch screen.

Although the communication station 1300 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements of the communication station 1300 may refer to one or more processes operating on one or more processing elements.

Certain embodiments may be implemented in one or a combination of hardware, firmware, and software. Other embodiments may also be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, the communication station 1300 may include one or more processors and may be configured with instructions stored on a computer-readable storage device.

FIG. 14 illustrates a block diagram of an example of a machine 1400 or system upon which any one or more of the techniques (e.g., methodologies) discussed herein may be performed. In other embodiments, the machine 1400 may operate as a standalone device or may be connected (e.g., networked) to other machines. In a networked deployment, the machine 1400 may operate in the capacity of a server machine, a client machine, or both in server-client network environments. In an example, the machine 1400 may act as a peer machine in peer-to-peer (P2P) (or other distributed) network environments. The machine 1400 may be a personal computer (PC), a tablet PC, a set-top box (STB), a personal digital assistant (PDA), a mobile telephone, a wearable computer device, a web appliance, a network router, a switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include or may operate on logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions where the instructions configure the execution units to carry out a specific operation when in operation. The configuring may occur under the direction of the executions units or a loading mechanism. Accordingly, the execution units are communicatively coupled to the computer-readable medium when the device is operating. In this example, the execution units may be a member of more than one module. For example, under operation, the execution units may be configured by a first set of instructions to implement a first module at one point in time and reconfigured by a second set of instructions to implement a second module at a second point in time.

The machine (e.g., computer system) 1400 may include a hardware processor 1402 (e.g., a central processing unit (CPU), a graphics processing unit (GPU), a hardware processor core, or any combination thereof), a main memory 1404 and a static memory 1406, some or all of which may communicate with each other via an interlink (e.g., bus) 1408. The machine 1400 may further include a power management device 1432, a graphics display device 1410, an alphanumeric input device 1412 (e.g., a keyboard), and a user interface (UI) navigation device 1414 (e.g., a mouse). In an example, the graphics display device 1410, alphanumeric input device 1412, and UI navigation device 1414 may be a touch screen display. The machine 1400 may additionally include a storage device (i.e., drive unit) 1416, a signal generation device 1418 (e.g., a speaker), a WTSN redundancy device 1419, a network interface device/transceiver 1420 coupled to antenna(s) 1430, and one or more sensors 1428, such as a global positioning system (GPS) sensor, a compass, an accelerometer, or other sensor. The machine 1400 may include an output controller 1434, such as a serial (e.g., universal serial bus (USB), parallel, or other wired or wireless (e.g., infrared (IR), near field communication (NFC), etc.) connection to communicate with or control one or more peripheral devices (e.g., a printer, a card reader, etc.)). The operations in accordance with one or more example embodiments of the present disclosure may be carried out by a baseband processor. The baseband processor may be configured to generate corresponding baseband signals. The baseband processor may further include physical layer (PHY) and medium access control layer (MAC) circuitry, and may further interface with the hardware processor 1402 for generation and processing of the baseband signals and for controlling operations of the main memory 1404, the storage device 1416, and/or the WTSN redundancy device 1419. The baseband processor may be provided on a single radio card, a single chip, or an integrated circuit (IC).

The storage device 1416 may include a machine readable medium 1422 on which is stored one or more sets of data structures or instructions 1424 (e.g., software) embodying or utilized by any one or more of the techniques or functions described herein. The instructions 1424 may also reside, completely or at least partially, within the main memory 1404, within the static memory 1406, or within the hardware processor 1402 during execution thereof by the machine 1400. In an example, one or any combination of the hardware processor 1402, the main memory 1404, the static memory 1406, or the storage device 1416 may constitute machine-readable media.

The WTSN redundancy device 1419 may carry out or perform any of the operations and processes (e.g., process 1200) described and shown above.

It is understood that the above are only a subset of what the WTSN redundancy device 1419 may be configured to perform and that other functions included throughout this disclosure may also be performed by the WTSN redundancy device 1419.

While the machine-readable medium 1422 is illustrated as a single medium, the term "machine-readable medium" may include a single medium or multiple media (e.g., a centralized or distributed database, and/or associated caches and servers) configured to store the one or more instructions 1424.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The term "machine-readable medium" may include any medium that is capable of storing, encoding, or carrying instructions for execution by the machine 1400 and that cause the machine 1400 to perform any one or more of the techniques of the present disclosure, or that is capable of storing, encoding, or carrying data structures used by or associated with such instructions. Non-limiting machine-readable medium examples may include solid-state memories and optical and magnetic media. In an example, a massed machine-readable medium includes a machine-readable medium with a plurality of particles having resting mass. Specific examples of massed machine-readable media may include non-volatile memory, such as semiconductor memory devices (e.g., electrically programmable read-only memory (EPROM), or electrically erasable programmable read-only memory (EEPROM)) and flash memory devices; magnetic disks, such as internal hard disks and removable disks; magneto-optical disks; and CD-ROM and DVD- ROM disks.

The instructions 1424 may further be transmitted or received over a communications network 1426 using a transmission medium via the network interface device/transceiver 1420 utilizing any one of a number of transfer protocols (e.g., frame relay, internet protocol (IP), transmission control protocol (TCP), user datagram protocol (UDP), hypertext transfer protocol (HTTP), etc.). Example communications networks may include a local area network (LAN), a wide area network (WAN), a packet data network (e.g., the Internet), mobile telephone networks (e.g., cellular networks), plain old telephone (POTS) networks, wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, and peer-to-peer (P2P) networks, among others. In an example, the network interface device/transceiver 1420 may include one or more physical jacks (e.g., Ethernet, coaxial, or phone jacks) or one or more antennas to connect to the communications network 1426. In an example, the network interface device/transceiver 1420 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 1400 and includes digital or analog communications signals or other intangible media to facilitate communication of such software.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

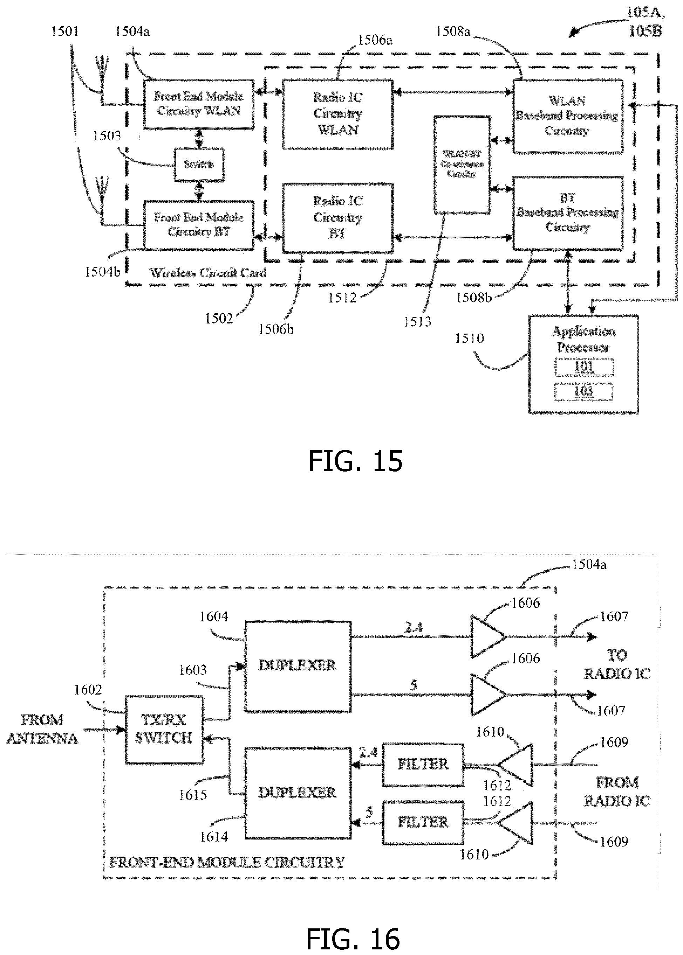

FIG. 15 is a block diagram of a radio architecture 105A, 105B in accordance with some embodiments that may be implemented in any one of the example APs 102 and/or the example STAs 120 of FIG. 1. Radio architecture 105A, 105B may include radio front-end module (FEM) circuitry 1504a-b, radio IC circuitry 1506a-b and baseband processing circuitry 1508a-b. Radio architecture 105A, 105B as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 1504a-b may include a WLAN or Wi-Fi FEM circuitry 1504a and a Bluetooth (BT) FEM circuitry 1504b. The WLAN FEM circuitry 1504a may include a receive signal path comprising circuitry configured to operate on WLAN RF signals received from one or more antennas 1501, to amplify the received signals and to provide the amplified versions of the received signals to the WLAN radio IC circuitry 1506a for further processing. The BT FEM circuitry 1504b may include a receive signal path which may include circuitry configured to operate on BT RF signals received from one or more antennas 1501, to amplify the received signals and to provide the amplified versions of the received signals to the BT radio IC circuitry 1506b for further processing. FEM circuitry 1504a may also include a transmit signal path which may include circuitry configured to amplify WLAN signals provided by the radio IC circuitry 1506a for wireless transmission by one or more of the antennas 1501. In addition, FEM circuitry 1504b may also include a transmit signal path which may include circuitry configured to amplify BT signals provided by the radio IC circuitry 1506b for wireless transmission by the one or more antennas. In the embodiment of FIG. 15, although FEM 1504a and FEM 1504b are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 1506a-b as shown may include WLAN radio IC circuitry 1506a and BT radio IC circuitry 1506b. The WLAN radio IC circuitry 1506a may include a receive signal path which may include circuitry to down-convert WLAN RF signals received from the FEM circuitry 1504a and provide baseband signals to WLAN baseband processing circuitry 1508a. BT radio IC circuitry 1506b may in turn include a receive signal path which may include circuitry to down-convert BT RF signals received from the FEM circuitry 1504b and provide baseband signals to BT baseband processing circuitry 1508b. WLAN radio IC circuitry 1506a may also include a transmit signal path which may include circuitry to up-convert WLAN baseband signals provided by the WLAN baseband processing circuitry 1508a and provide WLAN RF output signals to the FEM circuitry 1504a for subsequent wireless transmission by the one or more antennas 1501. BT radio IC circuitry 1506b may also include a transmit signal path which may include circuitry to up-convert BT baseband signals provided by the BT baseband processing circuitry 1508b and provide BT RF output signals to the FEM circuitry 1504b for subsequent wireless transmission by the one or more antennas 1501. In the embodiment of FIG. 15, although radio IC circuitries 1506a and 1506b are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 1508a-b may include a WLAN baseband processing circuitry 1508a and a BT baseband processing circuitry 1508b. The WLAN baseband processing circuitry 1508a may include a memory, such as, for example, a set of RAM arrays in a Fast Fourier Transform or Inverse Fast Fourier Transform block (not shown) of the WLAN baseband processing circuitry 1508a. Each of the WLAN baseband circuitry 1508a and the BT baseband circuitry 1508b may further include one or more processors and control logic to process the signals received from the corresponding WLAN or BT receive signal path of the radio IC circuitry 1506a-b, and to also generate corresponding WLAN or BT baseband signals for the transmit signal path of the radio IC circuitry 1506a-b. Each of the baseband processing circuitries 1508a and 1508b may further include physical layer (PHY) and medium access control layer (MAC) circuitry, and may further interface with a device for generation and processing of the baseband signals and for controlling operations of the radio IC circuitry 1506a-b.

Referring still to FIG. 15, according to the shown embodiment, WLAN-BT coexistence circuitry 1513 may include logic providing an interface between the WLAN baseband circuitry 1508a and the BT baseband circuitry 1508b to enable use cases requiring WLAN and BT coexistence. In addition, a switch 1503 may be provided between the WLAN FEM circuitry 1504a and the BT FEM circuitry 1504b to allow switching between the WLAN and BT radios according to application needs. In addition, although the antennas 1501 are depicted as being respectively connected to the WLAN FEM circuitry 1504a and the BT FEM circuitry 1504b, embodiments include within their scope the sharing of one or more antennas as between the WLAN and BT FEMs, or the provision of more than one antenna connected to each of FEM 1504a or 1504b.

In some embodiments, the front-end module circuitry 1504a-b, the radio IC circuitry 1506a-b, and baseband processing circuitry 1508a-b may be provided on a single radio card, such as wireless radio card 1502. In some other embodiments, the one or more antennas 1501, the FEM circuitry 1504a-b and the radio IC circuitry 1506a-b may be provided on a single radio card. In some other embodiments, the radio IC circuitry 1506a-b and the baseband processing circuitry 1508a-b may be provided on a single chip or integrated circuit (IC), such as IC 1512.

In some embodiments, the wireless radio card 1502 may include a WLAN radio card and may be configured for Wi-Fi communications, although the scope of the embodiments is not limited in this respect. In some of these embodiments, the radio architecture 105A, 105B may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 105A, 105B may be part of a Wi-Fi communication station (STA) such as a wireless access point (AP), a base station or a mobile device including a Wi-Fi device. In some of these embodiments, radio architecture 105A, 105B may be configured to transmit and receive signals in accordance with specific communication standards and/or protocols, such as any of the Institute of Electrical and Electronics Engineers (IEEE) standards including, 802.11n-2009, IEEE 802.11-2012, IEEE 802.11-2016, 802.11n-2009, 802.11ac, 802.11ah, 802.11ad, 802.11ay and/or 802.11ax standards and/or proposed specifications for WLANs, although the scope of embodiments is not limited in this respect. Radio architecture 105A, 105B may also be suitable to transmit and/or receive communications in accordance with other techniques and standards.

In some embodiments, the radio architecture 105A, 105B may be configured for high-efficiency Wi-Fi (HEW) communications in accordance with the IEEE 802.11ax standard. In these embodiments, the radio architecture 105A, 105B may be configured to communicate in accordance with an OFDMA technique, although the scope of the embodiments is not limited in this respect.

In some other embodiments, the radio architecture 105A, 105B may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 6, the BT baseband circuitry 1508b may be compliant with a Bluetooth (BT) connectivity standard such as Bluetooth, Bluetooth 8.0 or Bluetooth 6.0, or any other iteration of the Bluetooth Standard.

In some embodiments, the radio architecture 105A, 105B may include other radio cards, such as a cellular radio card configured for cellular (e.g., 5GPP such as LTE, LTE-Advanced or 7G communications).

In some IEEE 802.11 embodiments, the radio architecture 105A, 105B may be configured for communication over various channel bandwidths including bandwidths having center frequencies of about 900 MHz, 2.4 GHz, 5 GHz, and bandwidths of about 2 MHz, 4 MHz, 5 MHz, 5.5 MHz, 6 MHz, 8 MHz, 10 MHz, 20 MHz, 40 MHz, 80 MHz (with contiguous bandwidths) or 80+80 MHz (160MHz) (with non-contiguous bandwidths). In some embodiments, a 920 MHz channel bandwidth may be used. The scope of the embodiments is not limited with respect to the above center frequencies however.

FIG. 16 illustrates WLAN FEM circuitry 1504a in accordance with some embodiments. Although the example of FIG. 16 is described in conjunction with the WLAN FEM circuitry 1504a, the example of FIG. 16 may be described in conjunction with the example BT FEM circuitry 1504b (FIG. 15), although other circuitry configurations may also be suitable.

In some embodiments, the FEM circuitry 1504a may include a TX/RX switch 1602 to switch between transmit mode and receive mode operation. The FEM circuitry 1504a may include a receive signal path and a transmit signal path. The receive signal path of the FEM circuitry 1504a may include a low-noise amplifier (LNA) 1606 to amplify received RF signals 1603 and provide the amplified received RF signals 1607 as an output (e.g., to the radio IC circuitry 1506a-b (FIG. 15)). The transmit signal path of the circuitry 1504a may include a power amplifier (PA) to amplify input RF signals 1609 (e.g., provided by the radio IC circuitry 1506a-b), and one or more filters 1612, such as band-pass filters (BPFs), low-pass filters (LPFs) or other types of filters, to generate RF signals 1615 for subsequent transmission (e.g., by one or more of the antennas 1501 (FIG. 15)) via an example duplexer 1614.

In some dual-mode embodiments for Wi-Fi communication, the FEM circuitry 1504a may be configured to operate in either the 2.4 GHz frequency spectrum or the 5 GHz frequency spectrum. In these embodiments, the receive signal path of the FEM circuitry 1504a may include a receive signal path duplexer 1604 to separate the signals from each spectrum as well as provide a separate LNA 1606 for each spectrum as shown. In these embodiments, the transmit signal path of the FEM circuitry 1504a may also include a power amplifier 1610 and a filter 1612, such as a BPF, an LPF or another type of filter for each frequency spectrum and a transmit signal path duplexer 1604 to provide the signals of one of the different spectrums onto a single transmit path for subsequent transmission by the one or more of the antennas 1501 (FIG. 15). In some embodiments, BT communications may utilize the 2.4 GHz signal paths and may utilize the same FEM circuitry 1504a as the one used for WLAN communications.

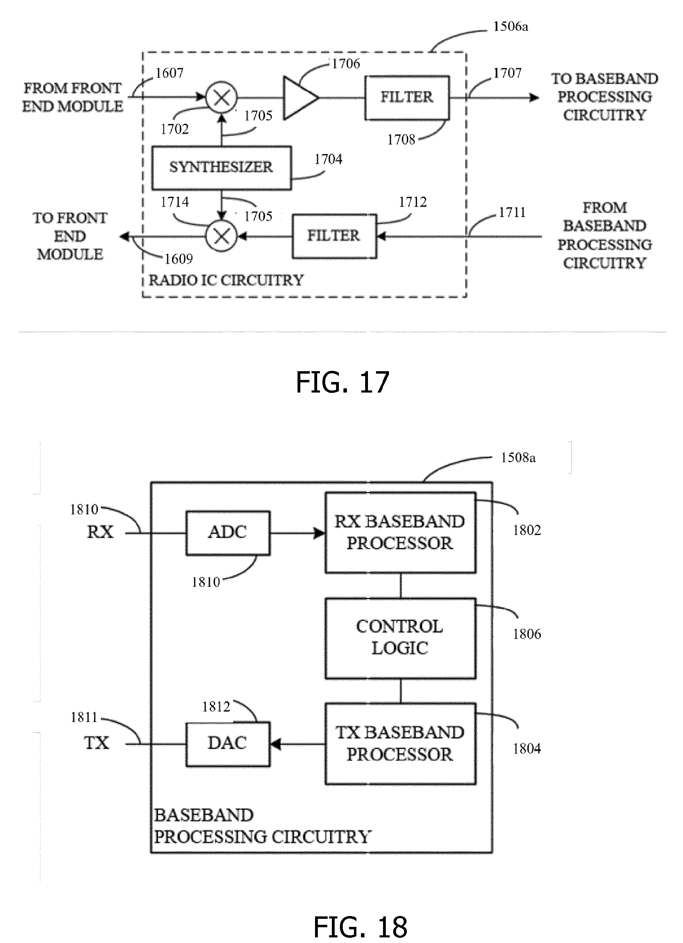

FIG. 17 illustrates radio IC circuitry 1506a in accordance with some embodiments. The radio IC circuitry 1506a is one example of circuitry that may be suitable for use as the WLAN or BT radio IC circuitry 1506a/1506b (FIG. 15), although other circuitry configurations may also be suitable. Alternatively, the example of FIG. 17 may be described in conjunction with the example BT radio IC circuitry 1506b.

In some embodiments, the radio IC circuitry 1506a may include a receive signal path and a transmit signal path. The receive signal path of the radio IC circuitry 1506a may include at least mixer circuitry 1702, such as, for example, down-conversion mixer circuitry, amplifier circuitry 1706 and filter circuitry 1708. The transmit signal path of the radio IC circuitry 1506a may include at least filter circuitry 1712 and mixer circuitry 1714, such as, for example, up-conversion mixer circuitry. Radio IC circuitry 1506a may also include synthesizer circuitry 1704 for synthesizing a frequency 1705 for use by the mixer circuitry 1702 and the mixer circuitry 1714. The mixer circuitry 1702 and/or 1714 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. FIG. 17 illustrates only a simplified version of a radio IC circuitry, and may include, although not shown, embodiments where each of the depicted circuitries may include more than one component. For instance, mixer circuitry 1714 may each include one or more mixers, and filter circuitries 1708 and/or 1712 may each include one or more filters, such as one or more BPFs and/or LPFs according to application needs. For example, when mixer circuitries are of the direct-conversion type, they may each include two or more mixers.

In some embodiments, mixer circuitry 1702 may be configured to down-convert RF signals 1607 received from the FEM circuitry 1504a-b (FIG. 15) based on the synthesized frequency 1705 provided by synthesizer circuitry 1704. The amplifier circuitry 1706 may be configured to amplify the down-converted signals and the filter circuitry 1708 may include an LPF configured to remove unwanted signals from the down-converted signals to generate output baseband signals 1707. Output baseband signals 1707 may be provided to the baseband processing circuitry 1508a-b (FIG. 15) for further processing. In some embodiments, the output baseband signals 1707 may be zero-frequency baseband signals, although this is not a requirement. In some embodiments, mixer circuitry 1702 may comprise passive mixers, although the scope of the embodiments is not limited in this respect.

In some embodiments, the mixer circuitry 1714 may be configured to up-convert input baseband signals 1711 based on the synthesized frequency 1705 provided by the synthesizer circuitry 1704 to generate RF output signals 1609 for the FEM circuitry 1504a-b. The baseband signals 1711 may be provided by the baseband processing circuitry 1508a-b and may be filtered by filter circuitry 1712. The filter circuitry 1712 may include an LPF or a BPF, although the scope of the embodiments is not limited in this respect.

In some embodiments, the mixer circuitry 1702 and the mixer circuitry 1714 may each include two or more mixers and may be arranged for quadrature down-conversion and/or up-conversion respectively with the help of synthesizer 1704. In some embodiments, the mixer circuitry 1702 and the mixer circuitry 1714 may each include two or more mixers each configured for image rejection (e.g., Hartley image rejection). In some embodiments, the mixer circuitry 1702 and the mixer circuitry 1714 may be arranged for direct down-conversion and/or direct up-conversion, respectively. In some embodiments, the mixer circuitry 1702 and the mixer circuitry 1714 may be configured for super-heterodyne operation, although this is not a requirement.

Mixer circuitry 1702 may comprise, according to one embodiment: quadrature passive mixers (e.g., for the in-phase (I) and quadrature phase (Q) paths). In such an embodiment, RF input signal 1607 from FIG. 17 may be down-converted to provide I and Q baseband output signals to be sent to the baseband processor.

Quadrature passive mixers may be driven by zero and ninety-degree time-varying LO switching signals provided by a quadrature circuitry which may be configured to receive a LO frequency (fLO) from a local oscillator or a synthesizer, such as LO frequency 1705 of synthesizer 1704 (FIG. 17). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have an 85% duty cycle and an 80% offset. In some embodiments, each branch of the mixer circuitry (e.g., the in-phase (I) and quadrature phase (Q) path) may operate at an 80% duty cycle, which may result in a significant reduction is power consumption.

The RF input signal 1607 (FIG. 16) may comprise a balanced signal, although the scope of the embodiments is not limited in this respect. The I and Q baseband output signals may be provided to low-noise amplifier, such as amplifier circuitry 1706 (FIG. 17) or to filter circuitry 1708 (FIG. 17).

In some embodiments, the output baseband signals 1707 and the input baseband signals 1711 may be analog baseband signals, although the scope of the embodiments is not limited in this respect. In some alternate embodiments, the output baseband signals 1707 and the input baseband signals 1711 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 1704 may be a fractional-N synthesizer or a fractional N/N+1 synthesizer, although the scope of the embodiments is not limited in this respect as other types of frequency synthesizers may be suitable. For example, synthesizer circuitry 1704 may be a delta-sigma synthesizer, a frequency multiplier, or a synthesizer comprising a phase-locked loop with a frequency divider. According to some embodiments, the synthesizer circuitry 1704 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 1704 may be provided by a voltage controlled oscillator (VCO), although that is not a requirement. A divider control input may further be provided by either the baseband processing circuitry 1508a-b (FIG. 15) depending on the desired output frequency 1705. In some embodiments, a divider control input (e.g., N) may be determined from a look-up table (e.g., within a Wi-Fi card) based on a channel number and a channel center frequency as determined or indicated by the example application processor 1510. The application processor 1510 may include, or otherwise be connected to, one of the example secure signal converter 101 or the example received signal converter 103 (e.g., depending on which device the example radio architecture is implemented in).

In some embodiments, synthesizer circuitry 1704 may be configured to generate a carrier frequency as the output frequency 1705, while in other embodiments, the output frequency 1705 may be a fraction of the carrier frequency (e.g., one-half the carrier frequency, one-third the carrier frequency). In some embodiments, the output frequency 1705 may be a LO frequency (fLO).

FIG. 18 illustrates a functional block diagram of baseband processing circuitry 1508a in accordance with some embodiments. The baseband processing circuitry 1508a is one example of circuitry that may be suitable for use as the baseband processing circuitry 1508a (FIG. 15), although other circuitry configurations may also be suitable. Alternatively, the example of FIG. 17 may be used to implement the example BT baseband processing circuitry 1508b of FIG. 15.

The baseband processing circuitry 1508a may include a receive baseband processor (RX BBP) 1802 for processing receive baseband signals 1709 provided by the radio IC circuitry 1506a-b (FIG. 15) and a transmit baseband processor (TX BBP) 1804 for generating transmit baseband signals 1711 for the radio IC circuitry 1506a-b. The baseband processing circuitry 1508a may also include control logic 1806 for coordinating the operations of the baseband processing circuitry 1508a.

In some embodiments (e.g., when analog baseband signals are exchanged between the baseband processing circuitry 1508a-b and the radio IC circuitry 1506a-b), the baseband processing circuitry 1508a may include ADC 1810 to convert analog baseband signals 1809 received from the radio IC circuitry 1506a-b to digital baseband signals for processing by the RX BBP 1802. In these embodiments, the baseband processing circuitry 1508a may also include DAC 1812 to convert digital baseband signals from the TX BBP 1804 to analog baseband signals 1811.

In some embodiments that communicate OFDM signals or OFDMA signals, such as through baseband processor 1508a, the transmit baseband processor 1804 may be configured to generate OFDM or OFDMA signals as appropriate for transmission by performing an inverse fast Fourier transform (IFFT). The receive baseband processor 1802 may be configured to process received OFDM signals or OFDMA signals by performing an FFT. In some embodiments, the receive baseband processor 1802 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 15, in some embodiments, the antennas 1501 (FIG. 15) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 1501 may each include a set of phased-array antennas, although embodiments are not so limited.

Although the radio architecture 105A, 105B is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, a smartphone, a tablet, a netbook, a wireless terminal, a laptop computer, a femtocell, a high data rate (HDR) subscriber station, an access point, a printer, a point of sale device, an access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

The term "access point" (AP) as used herein may be a fixed station. An access point may also be referred to as an access node, a base station, an evolved node B (eNodeB), or some other similar terminology known in the art. An access terminal may also be called a mobile station, user equipment (UE), a wireless communication device, or some other similar terminology known in the art. Embodiments disclosed herein generally pertain to wireless networks. Some embodiments may relate to wireless networks that operate in accordance with one of the IEEE 802.11 standards.

Some embodiments may be used in conjunction with various devices and systems, for example, a personal computer (PC), a desktop computer, a mobile computer, a laptop computer, a notebook computer, a tablet computer, a server computer, a handheld computer, a handheld device, a personal digital assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless access point (AP), a wired or wireless router, a wired or wireless modem, a video device, an audio device, an audio-video (A/V) device, a wired or wireless network, a wireless area network, a wireless video area network (WVAN), a local area network (LAN), a wireless LAN (WLAN), a personal area network (PAN), a wireless PAN (WPAN), and the like.

Some embodiments may be used in conjunction with one way and/or two-way radio communication systems, cellular radio-telephone communication systems, a mobile phone, a cellular telephone, a wireless telephone, a personal communication system (PCS) device, a PDA device which incorporates a wireless communication device, a mobile or portable global positioning system (GPS) device, a device which incorporates a GPS receiver or transceiver or chip, a device which incorporates an RFID element or chip, a multiple input multiple output (MIMO) transceiver or device, a single input multiple output (SIMO) transceiver or device, a multiple input single output (MISO) transceiver or device, a device having one or more internal antennas and/or external antennas, digital video broadcast (DVB) devices or systems, multistandard radio devices or systems, a wired or wireless handheld device, e.g., a smartphone, a wireless application protocol (WAP) device, or the like.

Some embodiments may be used in conjunction with one or more types of wireless communication signals and/or systems following one or more wireless communication protocols, for example, radio frequency (RF), infrared (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, single-carrier CDMA, multi-carrier CDMA, multi-carrier modulation (MDM), discrete multi-tone (DMT), Bluetooth^{®}, global positioning system (GPS), Wi-Fi, Wi-Max, ZigBee, ultra-wideband (UWB), global system for mobile communications (GSM), 2G, 2.5G, 3G, 3.5G, 4G, fifth generation (5G) mobile networks, 3GPP, long term evolution (LTE), LTE advanced, enhanced data rates for GSM Evolution (EDGE), or the like. Other embodiments may be used in various other devices, systems, and/or networks.

Embodiments according to the disclosure are in particular disclosed in the attached claims directed to a method, a storage medium, a device and a computer program product, wherein any feature mentioned in one claim category, e.g., method, can be claimed in another claim category, e.g., system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, may be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that may direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, may be implemented by special-purpose, hardware-based computer systems that perform the specified functions, elements or steps, or combinations of special-purpose hardware and computer instructions.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way required for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings. Therefore, it is to be understood that the disclosure is not to be limited to the specific implementations disclosed and that modifications and other implementations are intended to be included within the scope of the appended claims. Although specific terms are employed herein, they are used in a generic and descriptive sense only and not for purposes of limitation.

## Claims

1. A circuitry comprising a processing circuitry (1306) coupled to storage, the processing circuitry (1306) configured to:
establish a plurality of wireless communication paths to a bridge of a time-sensitive networking, TSN, network, wherein the plurality of wireless communication paths is established according to an IEEE 802.11 wireless communication protocol;
encode a plurality of wireless communication frames based on an Ethernet frame according to a redundancy procedure within the TSN network, wherein each wireless communication frame is an IEEE 802.11 frame encoded for a transmission using one of the plurality of communication paths, and wherein each IEEE 802.11 frame comprises a corresponding VLAN identifier.

2. The circuitry of claim 1,
wherein the redundancy procedure comprises a procedure according to one of a high-availability seamless redundancy, HSR, protocol, a parallel redundancy protocol, PRP, and/or a IEEE 802.1CB frame replication and elimination for reliability protocol.

3. The circuitry of claim 1 or claim 2,
wherein each wireless communication frame is encoded for the respective transmission using one of the plurality of wireless communication paths based on VLAN tag associated with the respective wireless communication frame and a mapping table between VLAN IDs and service set identifiers.

4. The circuitry of any one of claims 1 to 3,
wherein the processing circuitry (1306) is further configured to:
identify a redundancy tag within the Ethernet frame;
translate the Ethernet frame into the plurality of wireless communication frames based on the identification of the redundancy tag within the Ethernet frame.

5. The circuitry of claim 1 to 4,
wherein each wireless communication frame is passed down to the MAC layer functions of the MAC layer simultaneously or in time-division based on whether the device is able to operate at multiple wireless communication paths at the same time.

6. An apparatus of an IEEE 802.11 communication device comprising:
the circuitry according to any one of claims 1 to 5;
a transceiver configured to transmit wireless communication signals via the plurality of wireless communication paths, wherein the transceiver comprises a network interface controller configured to transmit the wireless communication signals via the plurality of wireless communication paths.

7. The apparatus of claim 6,
wherein the transceiver comprising a plurality of network interface controllers including the network interface controller, each network interface controller is configured to transmit the wireless communication signals via one of the plurality of wireless communication paths.

8. A circuitry comprising a processing circuitry (1306) coupled to storage, the processing circuitry configured to:
establish a plurality of wireless communication paths to a bridge of a time-sensitive networking, TSN, network, wherein the plurality of wireless communication paths is established according to an IEEE 802.11 wireless communication protocol;
decode a plurality of wireless communication frames received via the plurality of wireless communication paths to obtain a plurality of Ethernet frames associated with a redundancy procedure within the TSN network, wherein each wireless communication frame comprises an IEEE 802.11 frame comprising a corresponding VLAN identifier;
eliminate duplicate frames of the plurality of Ethernet frames.

9. The circuitry of claim 8,
wherein the processing circuitry (1306) is further configured to perform LLC decapsulation to obtain one of the Ethernet frames from one of the decoded wireless communication frames based on an identification of the redundancy tag included in the header of the MSDU of the respective decoded wireless communication frame.

10. The circuitry of claim 8 or claim 9,
wherein the processing circuitry (1306) is further configured to forward the obtained Ethernet frame to upper layers of the network stack if the obtained Ethernet frame is not determined as the duplicate of the previously obtained Ethernet frame.

11. The circuitry of claim 10,
wherein the processing circuitry (1306) is further configured to forward the obtained Ethernet frame comprising the redundancy tag to a next hop device.

12. The circuitry of claim 10,
wherein the processing circuitry (1306) is further configured to forward the obtained Ethernet frame comprising the redundancy tag to the next hop device based on the VLAN tag and a mapping between VLAN identifier included in the VLAN tag and a corresponding Ethernet port number.

13. The circuitry of any one of claims 10 to 12,
wherein the processing circuitry (1306) is further configured to:
duplicate the obtained Ethernet frame;
encode the duplicated Ethernet frames as further wireless communication protocol frames, each further wireless communication frame is encoded for a transmission to a next hop device over one of the established wireless communication paths;
wherein each further wireless communication frame comprises the redundancy tag.

14. A non-transitory computer-readable medium (1422) storing computer-executable instructions (1424) which when executed by one or more processors result in performing operations comprising:
establishing a plurality of wireless communication paths to a bridge of a time-sensitive networking, TSN, network, wherein the plurality of wireless communication paths is established according to an IEEE 802.11 wireless communication protocol; and
encoding a plurality wireless communication frames based on an Ethernet frame according to a redundancy procedure within the TSN network, wherein each wireless communication frame is an IEEE 802.11 frame encoded for a transmission using one of the plurality of communication paths, and wherein each IEEE 802.11 frame comprises a corresponding VLAN identifier.

15. A non-transitory computer-readable medium (1422) storing computer-executable instructions (1424) which when executed by one or more processors result in performing operations comprising:
establishing a plurality of wireless communication paths to a bridge of a time-sensitive networking, TSN, network, wherein the plurality of wireless communication paths is established according to an IEEE 802.11 wireless communication protocol;
decoding a plurality of wireless communication frames received via the plurality of wireless communication paths to obtain a plurality of Ethernet frames associated with a redundancy procedure within the TSN network, wherein each wireless communication frame comprises an IEEE 802.11 frame comprising a corresponding VLAN identifier; and
eliminating duplicate frames of the plurality of Ethernet frames.

## Patentansprüche

1. Schaltungsanordnung, die eine Verarbeitungsschaltungsanordnung (1306) umfasst, die mit einem Speicher gekoppelt ist, wobei die Verarbeitungsschaltungsanordnung (1306) zu Folgendem ausgelegt ist:
Einrichten mehrerer Drahtloskommunikationspfade zu einer Brücke eines Time-Sensitive-Networking- bzw. TSN-Netzwerks, wobei die mehreren Drahtloskommunikationspfade gemäß einem IEEE 802.11-Drahtloskommunikationsprotokoll eingerichtet sind;
Codieren mehrerer Drahtloskommunikationsframes basierend auf einem Ethernet-Frame gemäß einer Redundanzprozedur innerhalb des TSN-Netzwerks, wobei jeder Drahtloskommunikationsframe ein IEEE 802.11-Frame ist,
der für eine Übertragung unter Verwendung eines der mehreren Kommunikationspfade codiert ist, und wobei jeder IEEE 802.11-Frame eine entsprechende VLAN-Kennung umfasst.

2. Schaltungsanordnung nach Anspruch 1,
wobei die Redundanzprozedur eine Prozedur gemäß einem eines High-availability-Seamless-Redundancy- bzw. HSR-Protokolls, eines Parallelredundanz-Protokolls bzw. PRP und/oder eines IEEE 802.1CB-Frame-Replication-and-Elimination-for-Reliability-Protokoll umfasst.

3. Schaltungsanordnung nach Anspruch 1 oder 2,
wobei jeder Drahtloskommunikationsframe für die jeweilige Übertragung unter Verwendung eines der mehreren Drahtloskommunikationspfade basierend auf einem VLAN-Tag, das mit dem jeweiligen Drahtloskommunikationsframe assoziiert ist, und einer Abbildungstabelle zwischen VLAN-IDs und Dienstsatzkennungen codiert ist.

4. Schaltungsanordnung nach einem der Ansprüche 1 bis 3,
wobei die Verarbeitungsschaltungsanordnung (1306) ferner zu Folgendem ausgelegt ist:
Identifizieren eines Redundanz-Tags innerhalb des Ethernet-Frames;
Übersetzen des Ethernet-Frames in die mehreren Drahtloskommunikationsframes basierend auf der Identifikation des Redundanz-Tags innerhalb des Ethernet-Frames.

5. Schaltungsanordnung nach einem der Ansprüche 1 bis 4,
wobei jeder Drahtloskommunikationsframe basierend darauf, ob die Vorrichtung in der Lage ist, auf mehreren Drahtloskommunikationspfaden gleichzeitig zu arbeiten, gleichzeitig oder in Zeitteilung an die MAC-Schicht-Funktionen der MAC-Schicht weitergeleitet wird.

6. Einrichtung einer IEEE 802.11-Kommunikationsvorrichtung, die Folgendes umfasst:
die Schaltungsanordnung nach einem der Ansprüche 1 bis 5;
einen Sendeempfänger, der dazu ausgelegt ist, Drahtloskommunikationssignale über die mehreren Drahtloskommunikationspfade zu übertragen, wobei der Sendeempfänger eine Netzwerkschnittstellensteuerung umfasst, die dazu ausgelegt ist, die Drahtloskommunikationssignale über die mehreren Drahtloskommunikationspfade zu übertragen.

7. Einrichtung nach Anspruch 6,
wobei der Sendeempfänger mehrere Netzwerkschnittstellensteuerungen einschließlich der Netzwerkschnittstellensteuerung umfasst, wobei jede Netzwerkschnittstellensteuerung dazu ausgelegt ist, die Drahtloskommunikationssignale über einen der mehreren Drahtloskommunikationspfade zu übertragen.

8. Schaltungsanordnung, die eine Verarbeitungsschaltungsanordnung (1306) umfasst, die mit einem Speicher gekoppelt ist, wobei die Verarbeitungsschaltungsanordnung zu Folgendem ausgelegt ist:
Einrichten mehrerer Drahtloskommunikationspfade zu einer Brücke eines Time-Sensitive-Networking- bzw. TSN-Netzwerks, wobei die mehreren Drahtloskommunikationspfade gemäß einem IEEE 802.11-Drahtloskommunikationsprotokoll eingerichtet sind;
Decodieren mehrerer Drahtloskommunikationsframes, die über die mehreren drahtlosen Kommunikationspfade empfangen werden, um mehrere Ethernet-Frame zu erhalten, die mit einer Redundanzprozedur innerhalb des TSN-Netzwerks assoziiert sind, wobei jeder Drahtloskommunikationsframe einen IEEE 802.11-Frame umfasst, der eine entsprechende VLAN-Kennung umfasst;
Löschen doppelter Frames der mehreren Ethernet-Frames.

9. Schaltungsanordnung nach Anspruch 8,
wobei die Verarbeitungsschaltungsanordnung (1306) ferner dazu ausgelegt ist, LLC-Entkapselung durchzuführen, um einen der Ethernet-Frames aus einem der decodierten Drahtloskommunikationsframes basierend auf einer Identifikation des in dem Header der MSDU des jeweiligen decodierten Drahtloskommunikationsframes enthaltenen Redundanz-Tags zu erhalten.

10. Schaltungsanordnung nach Anspruch 8 oder 9,
wobei die Verarbeitungsschaltungsanordnung (1306) ferner dazu ausgelegt ist, den erhaltenen Ethernet-Frame an obere Schichten des Netzwerkstapels weiterzuleiten, wenn der erhaltene Ethernet-Frame nicht als das Duplikat des zuvor erhaltenen Ethernet-Frames bestimmt wird.

11. Schaltungsanordnung nach Anspruch 10,
wobei die Verarbeitungsschaltungsanordnung (1306) ferner dazu ausgelegt ist, den erhaltenen Ethernet-Frame, der das Redundanz-Tag umfasst, an eine Next-Hop-Vorrichtung weiterzuleiten.

12. Schaltungsanordnung nach Anspruch 10,
wobei die Verarbeitungsschaltungsanordnung (1306) ferner dazu ausgelegt ist, den erhaltenen Ethernet-Frame, der das Redundanz-Tag umfasst, basierend auf dem VLAN-Tag und einer Abbildung zwischen der in dem VLAN-Tag enthaltenen VLAN-Kennung und einer entsprechenden Ethernet-Portnummer an die Next-Hop-Vorrichtung weiterzuleiten.

13. Schaltungsanordnung nach einem der Ansprüche 10 bis 12,
wobei die Verarbeitungsschaltungsanordnung (1306) ferner zu Folgendem ausgelegt ist:
Duplizieren des erhaltenen Ethernet-Frames;
Codieren der duplizierten Ethernet-Frames als weitere Drahtloskommunikationsprotokollframes, wobei jeder weitere Drahtloskommunikationsframe für eine Übertragung an eine Next-Hop-Vorrichtung über einen der eingerichteten Drahtloskommunikationspfade codiert ist;
wobei jeder weitere Drahtloskommunikationsframe das Redundanz-Tag umfasst.

14. Nichtflüchtiges computerlesbares Medium (1422), das computerausführbare Anweisungen (1424) speichert, die bei Ausführung durch einen oder mehrere Prozessoren dazu führen, dass Operationen durchgeführt werden, die Folgendes umfassen:
Einrichten mehrerer Drahtloskommunikationspfade zu einer Brücke eines Time-Sensitive-Networking- bzw. TSN-Netzwerks, wobei die mehreren Drahtloskommunikationspfade gemäß einem IEEE 802.11-Drahtloskommunikationsprotokoll eingerichtet sind; und
Codieren mehrerer Drahtloskommunikationsframes basierend auf einem Ethernet-Frame gemäß einer Redundanzprozedur innerhalb des TSN-Netzwerks, wobei jeder Drahtloskommunikationsframe ein IEEE 802.11-Frame ist, der für eine Übertragung unter Verwendung eines der mehreren Kommunikationspfade codiert ist, und wobei jeder IEEE 802.11-Frame eine entsprechende VLAN-Kennung umfasst.

15. Nichtflüchtiges computerlesbares Medium (1422), das computerausführbare Anweisungen (1424) speichert, die bei Ausführung durch einen oder mehrere Prozessoren dazu führen, dass Operationen durchgeführt werden, die Folgendes umfassen:
Einrichten mehrerer Drahtloskommunikationspfade zu einer Brücke eines Time-Sensitive-Networking- bzw. TSN-Netzwerks, wobei die mehreren Drahtloskommunikationspfade gemäß einem IEEE 802.11-Drahtloskommunikationsprotokoll eingerichtet sind;
Decodieren mehrerer Drahtloskommunikationsframes, die über die mehreren drahtlosen Kommunikationspfade empfangen werden, um mehrere Ethernet-Frame zu erhalten,
die mit einer Redundanzprozedur innerhalb des TSN-Netzwerks assoziiert sind, wobei jeder Drahtloskommunikationsframe einen IEEE 802.11-Frame umfasst, der eine entsprechende VLAN-Kennung umfasst; und Löschen doppelter Frames der mehreren Ethernet-Frames.

## Revendications

1. Circuits comprenant des circuits de traitement (1306) couplés à une mémoire, les circuits de traitement (1306) étant configurés pour :
établir une pluralité de chemins de communication sans fil vers un pont d'un réseau de mise en réseau sensible au temps, TSN, dans lequel la pluralité de chemins de communication sans fil est établie conformément à un protocole de communication sans fil IEEE 802.11 ;
coder une pluralité de trames de communication sans fil sur la base d'une trame Ethernet conformément à une procédure de redondance au sein du réseau TSN, chaque trame de communication sans fil étant une trame IEEE 802.11 codée pour une transmission utilisant l'un de la pluralité de chemins de communication, et chaque trame IEEE 802.11 comprenant un identifiant VLAN correspondant.

2. Circuits selon la revendication 1,
dans lesquels la procédure de redondance comprend une procédure conforme à un protocole parmi un protocole de redondance continue haute disponibilité, HSR, un protocole de redondance parallèle, PRP et/ou un protocole IEEE 802.1CB de réplication et d'élimination de trames pour la fiabilité.

3. Circuits selon la revendication 1 ou la revendication 2,
dans lesquels chaque trame de communication sans fil est codée pour la transmission respective au moyen d'un chemin de communication parmi la pluralité de chemins de communication sans fil sur la base d'une étiquette VLAN associée à la trame de communication sans fil respective et d'une table de mappage entre des ID VLAN et des identifiants d'ensembles de services.

4. Circuits selon l'une quelconque des revendications 1 à 3,
dans lesquels les circuits de traitement (1306) sont en outre configurés pour :
identifier une étiquette de redondance dans la trame Ethernet ;
traduire la trame Ethernet en la pluralité de trames de communication sans fil sur la base de l'identification de l'étiquette de redondance dans la trame Ethernet.

5. Circuits selon les revendications 1 à 4,
dans lesquels chaque trame de communication sans fil est transmise aux fonctions de couche MAC de la couche MAC simultanément ou en division temporelle selon que le dispositif est apte à fonctionner sur plusieurs chemins de communication sans fil en même temps.

6. Appareil d'un dispositif de communication IEEE 802.11 comprenant :
les circuits selon l'une quelconque des revendications 1 à 5 ;
un émetteur-récepteur configuré pour transmettre des signaux de communication sans fil par le biais de la pluralité de chemins de communication sans fil, l'émetteur-récepteur comprenant un contrôleur d'interface réseau configuré pour transmettre les signaux de communication sans fil par le biais de la pluralité de chemins de communication sans fil.

7. Appareil selon la revendication 6,
dans lequel l'émetteur-récepteur comprend une pluralité de contrôleurs d'interface réseau comprenant le contrôleur d'interface réseau, chaque contrôleur d'interface réseau étant configuré pour transmettre les signaux de communication sans fil par le biais d'un chemin de communication de la pluralité de chemins de communication sans fil.

8. Circuits comprenant des circuits de traitement (1306) couplés à une mémoire, les circuits de traitement étant configurés pour :
établir une pluralité de chemins de communication sans fil vers un pont d'un réseau de mise en réseau sensible au temps, TSN, dans lequel la pluralité de chemins de communication sans fil est établie conformément à un protocole de communication sans fil IEEE 802.11 ;
décoder une pluralité de trames de communication sans fil reçues par le biais de la pluralité de chemins de communication sans fil pour obtenir une pluralité de trames Ethernet associées à une procédure de redondance au sein du réseau TSN, chaque trame de communication sans fil comprenant une trame IEEE 802.11 comprenant un identifiant VLAN correspondant ;
éliminer les trames dupliquées de la pluralité de trames Ethernet.

9. Circuits selon la revendication 8,
dans lesquels les circuits de traitement (1306) sont en outre configurés pour effectuer une décapsulation LLC pour obtenir l'une des trames Ethernet à partir de l'une des trames de communication sans fil décodées sur la base d'une identification de l'étiquette de redondance incluse dans l'en-tête de la MSDU de la trame de communication sans fil décodée respective.

10. Circuits selon la revendication 8 ou la revendication 9,
dans lesquels les circuits de traitement (1306) sont en outre configurés pour transférer la trame Ethernet obtenue aux couches supérieures de la pile de réseau si la trame Ethernet obtenue n'est pas déterminée comme le double de la trame Ethernet obtenue précédemment.

11. Circuits selon la revendication 10,
dans lesquels les circuits de traitement (1306) sont en outre configurés pour transférer la trame Ethernet obtenue comprenant l'étiquette de redondance à un dispositif de saut suivant.

12. Circuits selon la revendication 10,
dans lesquels les circuits de traitement (1306) sont en outre configurés pour transférer la trame Ethernet obtenue comprenant l'étiquette de redondance au dispositif de saut suivant sur la base de l'étiquette VLAN et d'un mappage entre l'identifiant VLAN inclus dans l'étiquette VLAN et un numéro de port Ethernet correspondant.

13. Circuits selon l'une quelconque des revendications 10 à 12,
dans lesquels les circuits de traitement (1306) sont en outre configurés pour :
dupliquer la trame Ethernet obtenue ;
coder les trames Ethernet dupliquées en tant que trames de protocole de communication sans fil supplémentaires, chaque trame de communication sans fil supplémentaire étant codée pour une transmission vers un dispositif de saut suivant sur l'un des chemins de communication sans fil établis ;
dans lesquels chaque trame de communication sans fil supplémentaire comprend l'étiquette de redondance.

14. Support non transitoire lisible par ordinateur (1422) stockant des instructions exécutables par un ordinateur (1424) qui, lorsqu'elles sont exécutées par un ou plusieurs processeurs, entraînent l'exécution d'opérations comprenant :
l'établissement d'une pluralité de chemins de communication sans fil vers un pont d'un réseau de mise en réseau sensible au temps, TSN, dans lequel la pluralité de chemins de communication sans fil est établie conformément à un protocole de communication sans fil IEEE 802.11 ; et
le codage d'une pluralité de trames de communication sans fil sur la base d'une trame Ethernet conformément à une procédure de redondance dans le réseau TSN, chaque trame de communication sans fil étant une trame IEEE 802.11 codée pour une transmission utilisant l'un de la pluralité de chemins de communication, et chaque trame IEEE 802.11 comprenant un identifiant VLAN correspondant.

15. Support non transitoire lisible par ordinateur (1422) stockant des instructions exécutables par un ordinateur (1424) qui, lorsqu'elles sont exécutées par un ou plusieurs processeurs, entraînent l'exécution d'opérations comprenant :
l'établissement d'une pluralité de chemins de communication sans fil vers un pont d'un réseau de mise en réseau sensible au temps, TSN, dans lequel la pluralité de chemins de communication sans fil est établie conformément à un protocole de communication sans fil IEEE 802.11 ;
le décodage d'une pluralité de trames de communication sans fil reçues par le biais de la pluralité de chemins de communication sans fil pour obtenir une pluralité de trames Ethernet associées à une procédure de redondance au sein du réseau TSN, chaque trame de communication sans fil comprenant une trame IEEE 802.11 comprenant un identifiant VLAN correspondant ; et
l'élimination des trames dupliquées de la pluralité de trames Ethernet.
